(19) Europäisches Patentamt
European Patent Office
Office européen des brevets

(11) EP 0 511 719 B1

(12) **EUROPEAN PATENT SPECIFICATION**

(45) Date of publication and mention of the grant of the patent:
**19.08.1998 Bulletin 1998/34**

(51) Int. Cl.[6]: **C01B 3/02**, C25B 1/02, H01M 8/06, H01M 8/18, C01B 13/02

(21) Application number: **92202007.8**

(22) Date of filing: **24.09.1985**

# (54) System for the extraction and utilization of oxygen from fluids

Verfahren zum Extrahieren und Verwenden von Sauerstoff aus Fluiden

Procédé d'extraction et d'utilisation d'oxygène à partir de fluides

(84) Designated Contracting States:
**AT BE CH DE FR GB IT LI LU NL SE**

(30) Priority: **24.09.1984 US 653549**
**24.09.1984 US 653729**
**24.09.1984 US 653850**

(43) Date of publication of application:
**04.11.1992 Bulletin 1992/45**

(62) Document number(s) of the earlier application(s) in accordance with Art. 76 EPC:
**85401857.9 / 0 176 446**

(73) Proprietor:
**AQUANAUTICS CORPORATION**
**Beaufort North Carolina 28516 (US)**

(72) Inventors:
- **Bonaventura, Joseph**
  **Beaufort, North Carolina 28516 (US)**
- **Bonaventura, Celia**
  **Beaufort, North Carolina 28516 (US)**
- **Van Ryzin, Joseph C.**
  **Kailua, Hawaii 96734 (US)**
- **Zenner, Bruce D.**
  **Alameda CA 94501 (US)**
- **Anderson, C. William**
  **Department of Chemistry**
  **Hampden-Cydney VA 23943 (US)**

(74) Representative:
**Dubois-Chabert, Guy**
**c/o BREVATOME**
**25, rue de Ponthieu**
**75008 Paris (FR)**

(56) References cited:
**EP-A- 0 098 731**
**EP-A- 0 147 012**
**WO-A-79/00030**
**FR-A- 2 428 456**
**US-A- 4 343 715**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Technical Field

This invention relates to an apparatus for and a process of extracting oxygen from fluids in which they are dissolved.

### Background Art

Oxygen is required in many important chemical reactions utilized by humans, the most important being life-supporting respiration. When these reactions are carried out on the surface of the earth, the oxygen content of air is often sufficient to provide enough oxygen for the desired reaction. However, there are many instances when oxygen is required at concentrations higher than those normally present in air. For example, pure oxygen is required in large quantities by the steel industry. Oxygen is used to volatilize carbon and other nonmetal impurities with greater speed and control than would be possible if air alone were used. Persons having lung disorders which interfere with their ability to obtain oxygen from air likewise require purified oxygen for home or hospital use. Miners working in so-called bad air, i.e., air of less than normal oxygen content, require bottled oxygen at present. Oxygen has proven highly efficient for the treatment of liquid effluents in sewage. Incineration of wastes in closed systems using pure oxygen has become an important method for disposing of toxic wastes.

Although various preparative methods exist for producing oxygen on a small scale, oxygen is generally prepared by the fractional distillation of liquid air when it is required in large quantities. Typically, filtered air is passed through an alkali absorbant in order to remove moisture and carbon dioxide. The air is then compressed, and the heat of compression is removed by ordinary cooling procedures. The cooled and compressed air is then allowed to expand, taking advantage of the fact that a compressed gas cools as it expands. The compressed gas is then recompressed, cooled, and expanded again multiple times in order to finally produce liquified air. The liquid air is allowed to warm in order to boil off nitrogen and other light impurities, leaving liquid oxygen. The liquid oxygen may be stored in that form or as compressed gaseous oxygen.

Although this process produces oxygen in a commercially useful form, it is a process which requires a large immovable plant and a delivery system for transporting either cryogenic liquid oxygen or compressed gas. While the oxygen distribution system has worked well for the steel industry, there are many applications where local production of oxygen would be useful. For example, home or hospital generators of oxygen would be extremely useful for persons afflicted with breathing disorders. Even large consumers of oxygen, such as the steel industry, would benefit by a process which reduces the energy requirements of producing oxygen from air by liquification.

Furthermore, one of the primary problems which hinders man in his efforts to explore and develop the ocean realms is the lack of a ready supply of oxygen. In most of the world's oceans, the oxygen content of both shallow and deep waters is similar to that of surface water in equilibrium with air. Practical methods have not yet been devised for extracting and utilizing this vast amount of oxygen for the maintenance of man in an undersea environment. Fish, however, have obviously solved the problem of oxygen extraction from seawater. Fish species weighing well over a thousand pounds and burning metabolites at rates roughly comparable to that of man easily extract adequate dissolved oxygen from seawater for their varied activities. Moreover, many species of fish transfer oxygen from seawater into a gaseous state. These fish, ones that possess swim bladders, are able to pump and concentrate oxygen against enormous hydrostatic pressure gradients. In certain fish species oxygen is transported from the dissolved state in seawater, with a ${}_{p}0_2$ of 0.2 atmospheres, to a gaseous phase in the swim bladder where the ${}_{p}0_2$ may exceed 100 atmospheres.

Many attempts to develop methodologies of extracting oxygen from gaseous mixtures or water are known. <u>Warne et al</u>, U.S. Pat. No. 2,217,850, and <u>Folger et al</u>, U.S. Pat No. 2,450,276, disclose processes of separating oxygen from other gases using solutions of cobalt compounds. However, these techniques would be ineffective in a liquid system, e.g., seawater, since the compounds are in solution and would be washed away if contacted with liquids rather than the disclosed gases. <u>Miller</u>, U.S. Pat. No. 3,230,045, discloses using oxygen-binding chromoproteins such as hemoglobin and hemocyanin to separate oxygen from other gases. The chromoproteins are kept moist or in solution and are immobilized on filter paper where they may be bound by a binder such as fibrin; an electrolyte such as sodium chloride may also be present. However, this technique would also be ineffective in a liquid system since the protein is not insoluble and thus would be washed away if water were allowed to flow through the system. Moreover, there is no provision for regeneration of oxidized (inactive) oxygen carriers that would be formed in this system. <u>Bodell</u>, U.S. Pat. No. 3,333,583, and <u>Robb</u>, U.S. Pat. No. 3,369,343, disclose apparatus for extracting oxygen from seawater using thin tubes of silicone rubber or a membrane of silicone rubber, respectively. However, neither the capillary networks nor the permeable membranes working alone have been found to be practicable in real-life situations. <u>Isomura</u>, U.S. Pat. No. 3,377,777, discloses concentrating oxygen from natural waters by equilibration with exhaled gases, i.e., by utilizing large areas of gas-water interface and simple diffusional considerations such that the partial pressure of the gas phase and the partial pressure of the liquid phase in the extraction zone provide for release of oxygen from the liquid phase into the gas phase

and absorption of $CO_2$ by the water phase. Additionally, the solubility of oxygen in seawater is decreased by heating the seawater, and this heating also increases the solubility of $CO_2$. However, the requirement of heating the seawater results in an energetically undesirable process. Rind, U.S. Pat. No. 4,020,833, discloses an oxygen source for closed environments comprising a mixture of a metallic superoxide, which releases oxygen upon contact with $CO_2$ and water vapor, and a material which absorbs $CO_2$. However, this system suffers from the defect of the capacity being limited by the bulk amount of mixture which can be carried, i.e., it is not capable of continuously producing oxygen without replenishment. Iles et al, U.S. Pat. No. 4,165,972, discloses separating oxygen from gas mixtures using metal chelates as sorbents. However, the technique is not extendable to the extraction of oxygen from water.

Many compounds in solution have been examined with respect to their oxygen absorption properties and the mechanistics thereof. The properties of hemoglobins, hemerythrins and hemocyanins, the naturally occurring oxygen carriers, have been the subject of numerous studies, as documented in Bonaventura et al, J. Am. Zool., 20, 7 (1980) and 20, 131 (1980). Artificial oxygen carriers and their properties in solution are described by a number of researchers. Traylor et al, "Solvent Effects on Reversible Formation and Oxidative Stability of Heme-Oxygen Complexes", J.A.C.S. 96, 5597 (1974) discloses the effect of solvent polarity on oxygenation of several heme-base complexes prepared by reduction with sodium dithionite or a mixture of Pd black and calcium hydride. Crumbliss et al, "Monomeric Cobalt-Oxygen Complexes", Science, 6, June 1969, Volume 164, pp. 1168-1170, discloses Schiff base complexes of Co(II) which form stable cobalt-oxygen species in solution instead of cobalt-oxygen-cobalt bridged complexes. Crumbless et al, "Monomeric Oxygen Adducts of N,N'-Ethylenebis (acetylacetoniminato) ligandcobalt(III): Preparation and Properties", J.A.C.S. 92, 55 (1970), discloses a series of monomeric molecular oxygen carriers based on cobalt ligand complexes. Dufour et al, "Reaction of Indoles with Molecular Oxygen Catalyzed by Metallonorphyrins", Journal of Molecular Catalysis, 1, 277 (1980), discloses the catalysis of the oxygenation of simple, alkyl-substituted indoles by Co(II), Co(III), and Mn(III) meso-tetraphenyl-porphines wherein a ternary complex $O_2$-CoTPP-indole is formed initially. Brault et al, "Ferrous Porphyrins in Organic Solvents: I. Preparation and Coordinating Properties", Biochemistry, 13, 4591 (1974), discloses the preparation and properties of ferrous deutereporphyrin dimethyl ester and ferrous mesotetraphenylporphine in various organic solvents. Chang et al, "Kinetics of Reversible Oxygenation of Pyrroheme-N-[3-(1-imidazolyl)propyl]amide", discloses studies on the oxygenation of pyrroheme-N-[3-(1-imidazolyl)propyl] amide, i.e., a synthesized section of the myoglobin active site. Castro, "Hexa and Pentacoordinate Iron Poryhyrins", Bioinorganic Chemistry, 4, 45-65 (1974), discloses the direct synthesis of hexa and pentacoordinate iron porphyrins, i.e., the prosthetic groups for the active sites of certain cytochrome and globin heme proteins. Chang et al, "Solution Behavior of a Synthetic Myoglobin Active Site", J.A.C.S., 95, 5810 (1973), discloses studies on a synthesized section of the myoglobin active site and indicates that the oxygen binding reaction does not require the protein. Naturally occurring oxygen carriers have been chemically cross-linked and their properties described. Bonsen et al, U.S. Pat No. 4,053,590, discloses a polymerized, cross-linked, stromal-free, hemoglobin proposed to be useful as a blood substitute. Morris et al, U.S. Pat No. 4,061,736, discloses intramolecularly cross-linked, stromal-free hemoglobin. Wong, U.S. Pat. No. 4,064,118, discloses a blood substitute or extender prepared by coupling hemoglobin with a polysaccharide material. Mazur, U.S. Pat. No. 3,925,344, discloses a plasma protein substitute, i.e., an intramolecular, cross-linked hemoglobin composition.

Numerous papers have been published on immobilization of hemoglobin and its functional consequences, but not in connection with processes for efficient oxygen extraction from fluids. Vejux et al, "Photoacoustic Spectrometry of Macroporous Hemoglobin Particles", J. Opt. Soc. Am., 7O, 560-562 (1980), discloses glutaraldehyde cross-linked hemoglobin and its functional properties. The preparation is described as being made up of macroporous particles. Hallaway et al, "Changes in Conformation and Function of Hemoglobin and Myoglobin Induced by Adsorption to Silica", BBRC, 86, 689-696 (1979), discloses that hemoglobin adsorbed on silica is somewhat different from hemoglobin in solution. The adsorbed form is not suitable for $O_2$ extraction from liquids. Antonini et al, "Immobilized Hemoproteins", Methods of Enzymology, 44, 538-546 (1976), discloses standard immobilization techniques as applied to hemoglobin and their functional consequences. Mention is made of hemoproteins bound to cross-linked insoluble polysaccharides such as Sephadex or Sepharose, using a pre-activation of the resin with CNBr. Rossi-Fanelli et al, "Properties of Human Hemoglobin Immobilized on Sepharose 4B", Eur. J. Biochemistry, 92, 253-259 (1978), discloses that the ability of the hemoglobin to be bound to Sepharose 4B is dependent upon the conformational state of the protein. Colosimo et al, "The Ethylisocyanate (EIC) Equilibrium of Matrix-Bound Hemoglobin", BBA, 328, 74-80 (1973), discloses Sephadex G-100, Sephadex DEAE-A50 and Sephadex CM-C50 as supports for human hemoglobin insolubilization. The paper shows that the affinity of the insolubilized protein for EIC is increased relative to that in solution. Lampe et al, "Die Bindung von Sauerstoff an tragerfixiertes Hamoglobin", Acta Biol. Med. Germ., 33, K49-K54 (1974), discloses studies on CM-Sephadex insolubilized hemoglobins. Lampe et al, "Der EinfluB der Immobilisierung von Hamoglobin auf dessen Sauerstoffindung", Acta Biol. Med. Germ., 34, 359-363 (1975), discloses studies on CM-Sephadex insolubilized hemoglobins. Pommerening et al, "Studies on the Characterization of Matrix-Bound Solubilized Human Hemoglobin", Internationales Symposium uber Struktur und Funktion der Erythrezyten (Rapoport and Jung, ed.), Berlin Akademie-Verlag Press, 179-186 (1975), discloses Sepharose-Sephadex types of insolubilization. Brunori et al, "Properties of Trout Hemoglobin Covalently Bound to a Solid Matrix", BBA, 494(2), 426-432, discloses Sepharose 4B or Sephadex G-200, activated by CNBr, to immobilize the hemoglobin. Some changes in the functional properties of the hemoglobin were found.

Various techniques for the insolubilization (or immobilization) of biological materials have been developed, though not described in conjunction with insolubilization and utilization of oxygen carriers. Stanley, U.S. Pat. No. 3,672,955, discloses a technique for the preparation of an insoluble, active enzyme, a biological catalyst, wherein an aqueous dispersion of the enzyme is emulsified with an organic polyisocyanate, mixed with a solid carrier and the volatile components are then evaporated from the mixture. Wood et al, U.S. Pat. No. 3,928,138, discloses a method of preparing a bound enzyme wherein, prior to foaming, an isocyanate-capped polyurethane is contacted with an aqueous disperson of enzyme under foam-forming conditions, whereby polyurethane foams containing integrally bound enzyme are obtained. Unsworth et al, U.S. Pat. No. 3,928,230, discloses the encapsulation of fluids and solids by dissolving a water-insoluble polymerizable epoxy monomer in a solvent having high affinity for water; dispersing the monomer solution in water; dispersing in the so-formed aqueous dispersion the substance to be encapsulated; adding a polymerizing agent in a solvent having a higher affinity for water than for the polymerizing agent; and polymerizing until polymerization of the monomer is complete. Wood et al, U.S. Pat. No. 3,929,574, discloses an enzyme integrally bound to a foamed polyurethane prepared by, prior to foaming, contacting an isocyanate-capped polyurethane with an aqueous dispersion of enzyme under foam-forming conditions, whereby polyurethane foams containing integrally bound enzyme are obtained. Hartdegen et al, U.S. Pat. No. 4,094,744, discloses water-dispersible protein/polyurethane reaction products formed by admixing a water-dispersible, biologically-active protein and an isocyanate-capped liquid polyurethane prepolymer having a linear polyester backbone under essentially anhydrous conditions to form a solution, said protein and prepolymer reacting to form a water-soluble reaction product wherein the protein and prepolymer are bound together. Hartdegen et al, U.S. Pat. No. 4,098,645, discloses enzymes immobilized by the process of mixing the protein and an isocyanate-capped liquid polyurethane prepolymer in the absence of water; foaming the mixture by reacting it with water to form a polyurethane foam. Huper et al, U.S. Pat. No. 4,044,196, discloses proteins insolubilized using polymers containing maleic anhydride or di- and polymethacrylates. Huper et al, U.S. Pat. No. 3,871,964, discloses proteins insolubilized using polymers containing anhydride, di-methacrylate and a hydrophilic monomer.

In addition to oxygen, many other molecules are bound to carriers when they are transported in a biological system. The properties of hemoglobins, hemerythrins and hemocyanins, the naturally occurring oxygen carriers, have been the subject of numerous studies, as documented in Bonaventura et al, J. Am. Zool., 20, 7 (1980) and 20, 131 (1980). In addition to oxygen, these carrier macromolecules also bind carbon monoxide, nitric oxide, hydroxide, cyanide, azide, fluoride, acetate, and formate, among other ligands. Artificial oxygen carriers and their properties in solution are described by a number of researchers. Travlor et al, "Solvent Effects on Reversible Formation and Oxidative Stability of Heme-Oxygen Complexes", J.A.C.S. 96, 5597 (1974) discloses the effect of solvent polarity on oxygenation of several heme-base complexes prepared by reduction with sodium dithionite or a mixture of Pd black and calcium hydride. Crumbliss et al, "Monomeric Cobalt-Oxygen Complexes", Science, 6, June 1969, Volume 164, pp. 1168-1170, discloses Schiff base complexes of Co(II) which form stable cobalt-oxygen species in solution instead of cobalt-oxygen-cobalt bridged complexes. Crumbless et al, "Monomeric Oxygen Adducts of N,N'-Ethylenebis (acetylacetoniminato) ligand-cobalt(III): Preparation and Properties", J.A.C.S. 92, 55 (1970), discloses a series of monomeric molecular oxygen carriers based on cobalt ligand complexes. Dufour et al, "Reaction of Indoles with Molecular Oxygen Catalyzed by Metalloporphyrins", Journal of Molecular Catalysis, 1,277 (1980), discloses the catalysis of the oxygenation of simple, alkyl-substituted indoles by Co(II), Co(III), and Mn(III) meso-tetraphenyl-porphines wherein a ternary complex $O_2$-CoTPP-indole is formed initially. Brault et al, "Ferrous Porphyrins in Organic Solvents: I. Preparation and Coordinating Properties", Biochemistry, 13, 4591 (1974), discloses the preparation and properties of ferrous deutereporphyrin dimethyl ester and ferrous mesotetraphenylporphine in various organic solvents. Chang et al, "Kinetics of Reversible Oxygenation of Pyrroheme-N-[3-(1-imidazolyl)propyl]amide" discloses studies on the oxygenation of pyrroheme-N-[3-(1-imidazolyl)propyl] amide, i.e., a synthesized section of the myoglobin active site. Castro, "Hexa and Pentacoordinate Iron Poryhyrins", Bioinorganic Chemistry, 4, 45-65 (1974), discloses the direct synthesis of hexa and pentacoordinate iron porphyrins, i.e., the prosthetic groups for the active sites of certain cytochrome and globin heme proteins. Chang et al, "Solution Behavior of a Synthetic Myoglobin Active Site", J.A.C.S., 95, 5810 (1973), discloses studies on a synthesized section of the myoglobin active site and indicates that the oxygen binding reaction does not require the protein. Naturally occurring oxygen carriers have been chemically cross-linked and their properties described. Bonsen et al, U.S. Pat No. 4,053,590, discloses a polymerized, cross-linked, stromal-free, hemoglobin proposed to be useful as a blood substitute. Morris et al, U.S. Pat No. 4,061,736, discloses intramolecularly cross-linked, stromal-free hemoglobin. Wong, U.S. Pat. No. 4,064,118, discloses a blood substitute or extender prepared by coupling hemoglobin with a polysaccharide material. Mazur, U.S. Pat. No. 3,925,344, discloses a plasma protein substitute, i.e., an intramolecular, cross-linked hemoglobin composition. However, cross-linked hemoglobin produces macromolecular complexes that retain many of hemoglobin's native properties.

However, little attention has been given to suitable means for reversibly removing the oxygen or other ligand from the carrier once it has become bound thereto. U.S. patent 4,343,715 describes several methods by which unloading of

previously known oxygen carriers can be accomplished. When the oxygen carrier is a porphin-containing compound having a $Co^{2+}$ or $Fe^{2+}$ ion bound in the porphin ring, a chemical alteration which oxidizes the metal ion to the 3+ state is able to release the bound oxygen. For example, ferricyanide oxidation of hemoglobin to the ferric state, called in the literature methemoglobin, is a chemical means for unloading the absorbed oxygen. In this and other chemical methods it is necessary to use a regeneration cycle to reactivate the oxygen carrier. With hemoglobin, dithionite can be used to reduce the active sites and render the molecules reactive toward oxygen once again. Such chemical methods are disadvantageous for several reasons. First, they require continuous supplies of both chemical oxidizing solutions and chemical reducing solutions if a continuous oxygen extraction is taking place. Second, direct contact between the chemical and the working fluid which is extracting oxygen is required. This results in contamination of the working fluid by the oxidizing and reducing solutions and generally requires some type of separation before the working fluid can be used again. Third, if oxidizing or reducing solutions are prepared in ready-to-use form, they take up great bulk because of the fluid required and are accordingly not suitable for use in a portable apparatus which is designed for continuous operation over a long period of time.

Hemoglobins derived from fish hemoglobins can be unloaded based on the pH sensitivity of specific fish hemoglobins. Irreversible binding of specific cofactors to normal human blood can also render human hemoglobin pH sensitive so that pH changes can lead to oxygen unloading with this system as well. However, this method has the same disadvantages as chemical oxidation and reduction since solutions of the correct pH must be maintained.

Because of the disadvantages of chemical treatment, other unloading processes have also been disclosed. Simply decreasing the oxygen pressure in the environment of the oxygen carrier has been proposed for oxygen unloading. If desired, unloading can be effected indirectly through a semipermeable membrane. In this case, fluid containing an oxygen carrier to which oxygen is bound is passed on one side of a membrane while a pump on the other side of the membrane is utilized to draw a vacuum and pull the oxygen out of the circulating fluid and across the semipermeable membrane into an oxygen storage chamber. Unfortunately, removal of oxygen from carriers by vacuum suffers from some disadvantages. In laboratory tests, only somewhat more than 50% of the loaded oxygen on insolubilized hemoglobin in polyurethane gels was found to be removed by a vacuum. Furthermore, if the oxygen unloading device is used under water, it becomes increasingly more difficult to draw a vacuum and to support the evacuated chamber against the increase of pressure from the outside environment with increasing depth.

An additional area of relevant prior art encompasses blood oxygenators. Many apparatus useful for extracorporeal blood oxygenation use oxygen-permeable membranes to supply oxygen to blood. Examples of patents which have issued or which have been published in this field include the following: PCT Published International Application 8100522 discloses a gas-permeable membrane and a blood oxygenator based on its use; British patent 1,570,917 discloses a blood oxygenator; German OS 2,851,776 (June 12, 1980) discloses a film-like selective permeable-membrane unit for mass transfer between fluids; U.S. Patent 4,199,458 discloses a membrane diffusion device with external compression; U.S. Patent 4,183,962 discloses oxygenating blood by the utilization of liquid membranes; published Netherlands patent Application 7900345 discloses a liquid-membrane-forming apparatus; U.S. Patent 4,151,088 discloses a membrane diffusion device; U.S. Patent 4,110,220 discloses a mass transfer device useful for blood oxygenation; Japanese Kokai 7816365 discloses an apparatus for equilibrating solutions with various gases; USSR patent 577,037 discloses a membrane for artificial oxygenation of blood; French patent 2,315,283 discloses a method and apparatus for oxygenation of blood; U.S. Patent 4,031,012 discloses a separatory apparatus useful for oxygenating blood; U.S. Patent 3,996,141 discloses a dialysis membrane useful for blood oxygenation; U.S. Patent 3,989,626 discloses a membrane transfer process and apparatus; British patent 1,442,754 discloses improvements in an apparatus for effecting mass transfer between fluids; British patent 1,447,174 discloses improvements in a membrane diffusion device; Canadian patent 1,156,414 discloses a microporous siloxane polymer membrane; Swedish patent 423,678 discloses a blood oxygenator; U.S. patent 4,353,799 discloses a hydrophobic diffusion membrane with a wettable surface useful for blood oxygenators; German OS 3,106,188 (August 26, 1982) discloses an oxygenator membrane; published Australian patent specification 517,953 (September 3, 1981) discloses a plate dialyser that can be used for blood oxygenation; Japanese Kokai 81132959 discloses an artificial lung; British patent 1,592,771 discloses an apparatus for mass transfer such as blood oxygenation; and French Patent 2,478,482 discloses a gas-permeable membrane useful in blood oxygenation. In addition to these patents, many other publications related to the field of blood oxygenation can be found by a computer-assisted search of Chemical Abstracts data bases using the search terms "blood" and "oxygenation". Using the ORBIT system, these search phrases located 54 relevant publications in the 1982-present data base (CA82) and 113 relevant publications in the 1977-1981 data base (CA77).

Many of the prior art problems discussed above were overcome by the invention disclosed in U.S. Patent 4,427,416 and 4,343,715, which disclose oxygen carriers which have been insolubilized at high concentrations by being entrapped and/or covalently linked to a polyurethane matrix or to comparable supports in states that are capable of reversible oxygen bonding and are regenerable in the event of oxidation. The material disclosed in these patents is generally known by the name "Hemosponge", since it is generally, though not necessarily, based on hemoglobin. The method and material as described in these patents are perfectly capable of extracting oxygen from various fluid environments in useful

form, but the rate of extraction is less than that which may be desired for many applications which involve a high rate of oxygen use. Accordingly, there remains a need for an improved apparatus and method for the extraction and utilization of oxygen and other ligands from fluids.

## Disclosure of the Invention

Accordingly, one object of the invention is to provide an apparatus capable of extracting oxygen from a fluid at a rate higher than that which has been previously available.

It is a further object of the invention to provide a system using an oxygen carrier that can be circulated between oxygen loading and unloading stations in order to simplify the cyclic nature of the oxygen loading and unloading processes.

These and other objects of the invention as will hereinafter become more readily apparent can be attained by providing a method for removing oxygen from a fluid environment, which comprises the steps of

contacting said environment with a first surface of an oxygen permeable membrane having a first and a second surface which separates said environment from an interior space of a closed container, and
contacting said second side of said membrane with a carrier fluid containing a non-proteinaceous oxygen binding compound which comprises a tetradentate molecule, a metal ion chelated by said molecule, and a nitrogenous base chelated to said metal ion, wherein said compound is not saturated with oxygen, thereby removing oxygen from said fluid environment and increasing oxygen concentration in said container.

The invention also provides, a gill for extracting oxygen from an environment contacting the gill, which comprises a container having an inlet, an outlet, and an oxygen permeable membrane which together at least in part define an inner space of said container, said membrane having a first surface adapted to be in contact with said environment and a second surface facing said interior space; a carrier fluid in contact with said second surface of said membrane in said first container, and a non-proteinaceous oxygen binding compound contained in said carrier fluid, wherein said compound comprises a tetradentate chelating molecule, a metal ion chelated in said molecule, and a nitrogenous base chelated to said metal ion.

The present invention also comprises the method by which this gill-like apparatus is used which briefly comprises contacting an external environment, which is a gas such as air or a liquid such as water, with the oxygen permeable membrane described above in order that the above-described oxygen binding compound can remove oxygen from the environment and increase the oxygen concentration first in the container and ultimately in a different desired location.

## Brief Description of the Drawings

A more complete appreciation of the invention and many of the attendant advantages thereof will be readily obtained as the same becomes better understood by reference to the following detailed description when considered in connection with the accompanying drawings, wherein:

Figure 1 is a schematic diagram of a generalized process of the invention.

Figure 2 is a schematic diagram of an embodiment of an oxygen extraction apparatus showing the operation of an electrochemical oxygen unloading system.

Figure 3 is a schematic diagram of a preferred embodiment of the invention in which extracted oxygen is consumed in a fuel cell.

Figure 4 is a schematic diagram of a preferred embodiment of the invention in which extracted oxygen is released in gaseous form through an oxygen permeable membrane.

Figure 5 is a plot showing weight advantages for the system of the invention over other systems of providing stored oxygen in underwater applications.

Figure 6 is a plot showing weight advantages of underwater propulsion systems using oxygen extracted according to the process of the invention over battery-powered underwater propulsion systems.

Figure 7 shows an underwater vehicle which extracts oxygen by the process of the invention.

Figure 8 shows a block diagram of a spark or diesel engine operating in closed exhaust mode in combination with an oxygen extractor of the invention.

Figure 9 shows in block diagram form an oxygen extraction system of the invention.

Figure 10 shows in block diagram form specific parameters of a preferred embodiment of an oxygen extraction apparatus.

Figure 11 shows in graphical form cyclic voltammetry of an oxygen carrier of the invention.

Figure 12 shows in graphical form spectra of the oxidized and reduced forms of an oxygen carrier of the invention.

Figure 13 shows two molecules of oxygen carrier usable in the present invention.

Figure 14 is a schematic diagram of a cell used for determining the electrochemical properties of the molecules represented on figure 13.

Figure 15 is a photograph of oxygen bubbles produced in the cell of figure 14.

Best Mode for Carrying Out the Invention

Although electrochemical measurements of the voltages required to oxidize and reduce certain natural molecules such as hemoglobin had been made prior to the present invention, there is no teaching in the prior art regarding electrochemical oxidation as a method of reversibly removing oxygen (or any other ligand) from a carrier molecule in a system designed to extract the ligand from one environment and produce a higher concentration of the ligand in another location for use in the production of useful work. Careful attention must be given the energetics of such systems, especially if oxygen is produced by the extraction apparatus and the oxygen is to be removed in sufficient quantities to provide energy to drive the system and to produce extra energy which can be used for useful work. The present inventors have discovered that certain oxygen carriers as well as carriers of other ligands can be reversibly cycled through a series of oxidation/reduction steps with low energy costs. This method is not usable with all ligand carriers but only those which have a first oxidation state capable of binding the ligand and a different oxidation state in which the ligand cannot bind to the carrier or is bound with less affinity. Both such cases are referred to as a "nonbinding-state" in this specification for simplicity. Such compounds are generally although not necessarily based on metal ions which reversibly cycle through lower and higher oxidation states. Carriers containing transition metal ions, especially iron and cobalt, are accordingly particularly useful in the practice of the present invention.

It will be readily recognized by those skilled in the art that a carrier molecule designed to bind one particular molecule in a biological system (or a synethetically produced carrier molecule) can often bind other molecules as well. For example, hemoglobin and other biologically derived oxygen-binding compounds can bind many ligands in addition to oxygen. For example, carbon monoxide, nitric oxide, oxygen, isocyanide, and nitroso-aromatics all bind to the reduced form of hemoglobin ($Fe^{2+}$). Hydroxide, cyanide, azide, fluoride, nitric oxide, acetate, and formate all bind to the oxidized form of hemoglobin ($Fe^{3+}$). Thus, although one often refers to hemoglobin and similar molecules as oxygen carriers, they are more correctly referred to a ligand carriers. Furthermore, the present invention does not rely on the presence of the ligand itself but on the ability of the carrier to be oxidized and reduced reversibly. Accordingly, any reference in this specification to a "oxygen carrier" or to a carrier as being a carrier of any particular ligand is not intended to specify that no other ligands can be carried by the same carrier molecule.

The present invention provides a combination of a closed membrane system with a reversible oxygen binding compound (oxygen carrier) on the side of the membrane isolated from the environment to provide an efficient system of extracting oxygen. The oxygen (ligand) binding compound is cycled through loading and unloading stations in order that oxygen is loaded onto and unloaded from the oxygen carrier at the proper times. Other differences and advantages of the present invention are discussed later in this specification.

One key aspect of the present invention is the oxygen carrier itself. Many oxygen carriers, such as hemoglobin and the artificial oxygen carriers described in the prior art section of this disclosure, are already known and can be used in the practice of the present invention. The basic characteristic of an oxygen carrier that can be used in the practice of the present invention is the ability of the oxygen carrier to bind oxygen reversibly (references to oxygen in this application are to molecular dioxygen unless otherwise specified). Typically, the oxygen carrier is contacted with oxygen under conditions in which the carrier is not saturated so that a carrier/oxygen complex is formed, and the complex is transported to another lcoation where conditions are changed so that the carrier/oxygen complex is supersaturated, thereby releasing oxygen in the second location. After oxygen is removed from the carrier fluid used to transport the oxygen carrier, the oxygen carrier is transported back to the original location where oxygen loading again occurs. This is similar to the process that takes place when the blood of an animal transports oxygen from the lungs or gills of an animal to its muscles where oxygen is released but differs in providing an artificial circulation system.

In the broader aspects of the invention, unloading of oxygen can be accomplished merely by reducing the pressure of oxygen at the unloading station. However, extremely favorable energy requirements have been demonstrated in a preferred embodiment of the invention which takes advantage of the different binding affinities for oxygen of various oxygen carriers that exhibit at least two oxidation states. The basic characteristics of a carrier that can be used in these preferred aspects of the invention are the existence of two oxidation states for the carrier, the ability of the carrier to be cycled between the two oxidation states by an electrochemical reaction, and different binding affinities for oxygen for the two oxidation states. Although the two oxidation states are referred to in this specification as a "binding-state" and a "nonbinding-state", these terms are relative rather than absolute. For example, if a nonbinding-state oxygen carrier has 70% of the binding capacity of the binding-state oxygen carrier, 30% of bound oxygen will be released by electrochemical cycling if the binding-state oxygen carrier is saturated with oxygen. Naturally, more oxygen will be released if there is a greater difference in oxygen affinity. Carriers having a binding capacity in the binding state at least twice that of the oxygen binding capacity of the nonbinding state are preferred. A binding/nonbinding ratio of oxygen binding capacities of 10 or more is most preferred.

The absolute binding affinity of the oxygen carrier is likewise relatively unimportant although high oxygen affinity is naturally preferred. Preferred carriers exhibit 50% saturation when in equilibrium with a partial pressure of oxygen of 0.15 atmosphere, more preferably 0.10 atmosphere, and most preferably 0.05 atmosphere. However, oxygen carriers having even lower oxygen affinities are still usable in the practice of the present invention as is well understood by those skilled in the art. For example, a binding-state oxygen carrier which is only 10% saturated will still release oxygen when its oxidation state is changed if the affinity of the nonbinding state is less than the affinity of the binding state or if equilibrium is perturbed by reducing the partial pressure of oxygen at the unloading station.

In the event that it is not self evident that a particular oxygen carrier can be used in the practice of the present invention, simple measurement of binding affinity, such as is described more fully later in this specification, for the oxidized and reduced states of the carrier will readily identify suitable carriers. As identified previously, a suitable carrier for the preferred embodiments will have two reversible oxidation states exhibiting different oxygen affinities while only one such state is necessary if there is to be no cycling between different oxidation states.

It will be readily recognized by those skilled in the art that a carrier molecule designed to bind one particular molecule in a biological system (or a synethetically produced carrier molecule) can often bind other molecules as well. For example, hemoglobin and other biologically derived oxygen-binding compounds can bind many ligands in addition to oxygen. For example, carbon monoxide, nitric oxide, oxygen, isocyanide, and nitroso-aromatics all bind to the reduced form of hemoglobin ($Fe^{2+}$). Hydroxide, cyanide, azide, fluoride, nitric oxide, acetate, and formate all bind to the oxidized form of hemoglobin and similar molecules as oxygen carriers, they are more correctly referred to as ligand carriers. Accordingly, any reference in this specification to a "oxygen carrier" or to a carrier as being a carrier of any particular ligand is not intended to specify that no other ligands can be carried by the same carrier molecule. Thus, the present invention can be used to extract other ligands from other environmental fluids (such as waste gas streams orchemical process streams).

The many known oxygen carriers can be divided into two basic groups: proteinaceous carriers (typically hemoglobin and similar compounds) and non-proteinaceous carriers. The latter type is suitable for use in the present invention since proteins are relatively unstable to temperature and solvent effects and are readily destroyed by biochemical attack (bacterial contamination).

Minor problems, likewise readily overcomable, also exist with nonproteinaceous carriers. For example, heme molecules (which contain iron in the +2 oxidation state) are readily oxidized (to $Fe^{3+}$) in the absence of the protective protein portion of the hemoglobin molecule. Oxidized heme is not capable of binding oxygen. Similar considerations are true for the cytochromes and other molecules containing a porphin ring. However, since the present invention deliberately changes the oxidation state to +3 in order to release oxygen, this is not a handicap in the present system as long as the cycle time is short enough to prevent too much oxidation from occurring during the oxygen loading step, as is described in detail later.

It was only with the investigations of the present inventors that it became possible to provide an apparatus and a method capable of extracting oxygen from an environment surrounding the apparatus at the rate which is now possible. For example, certain preferred embodiments of the invention are capable of extracting oxygen from seawater where it is present at a concentration of about 7 parts per million (ppm) into a carrier fluid at a concentration of 860 ppm (600 ml of STP oxygen per liter of carrier fluid), a concentration 3 times that which is present in air and over 100 times that which was present in seawater.

Several advantages are achieved by using nonproteinaceous carriers as opposed to proteinaceous carriers such as hemoglobin. In addition to those advantages of stability previously mentioned, non-proteinaceous carriers are much smaller than hemoglobin and can therefore be packed more tightly into a fluid carrier to produce an efficient and highly

concentrated oxygen extracting fluid composition. For example, when a heme molecule is used as taught herein, 20 millimolar concentrations can easily be attained which have a theoretical oxygen carrying capacity of 640 milligrams (914 milliliters at STP) of oxygen per liter of carrier fluid.

The use of synthetic oxygen carriers, such as the modified hemes and other like compounds known in the art, which show reversible oxygen binding, allow the attainment of high oxygen (and other ligand) absorbing capacity in minimum absorber volume. Several such carriers are discussed in the section of this application entitled Background Art.

Non-proteinaceous oxygen carriers of the invention, generally comprise a metal ion chelated to nitrogens of a tetradentate molecule (often but not necessarily cyclic). Such compounds typically have a tetraaminotetra(trimethylene) structure forming at least part of the basic molecule. This can be represented by the formula

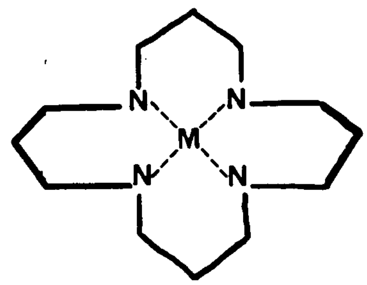

in which M represents the metal ion. Organic substituents can be present at any of the methylene carbons as long as they do not destroy the planarity of the metal binding nitrogens and any carbon-carbon or carbon-nitrogen single bond can be replaced with a double bond as long as the double bonds are not cumulative.

Two axial positions remain free in such molecules and are available to bind oxygen or another ligand. However, in the absence of some additional chelating group to perform the same protective function as the proteinaceous protein of hemoglobin, the metal ion will be oxidized to a non-binding form, especially in aqueous systems. Accordingly it is often useful to provide a nitrogenous base to chelate with one side of the metal ion so that oxidation can be prevented. This can be symbolized as follows:

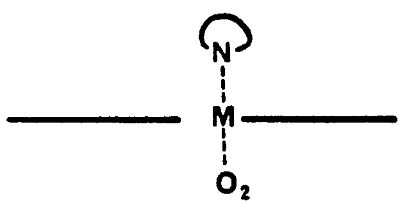

in which —M— represents a side view of the essentially flat tetradentate chelating molecule and N represents a nitrogenous base, whose various possible structures are discussed later in detail.

Many compounds which are useful in carrying out the present invention contain a porphin ring, a metal ion chelated in the ring, and a nitrogenous base chelated to the metal ion in at least one of the two possible axial positions not occupied by the porphin nitrogens. Porphin itself is a tetrapyrrole having the following structure:

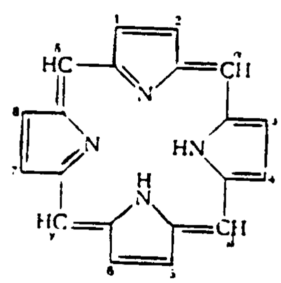

The porphin ring occurs widely in nature, particularly in compounds known as porphyrins. For example, porphyrins

appear in hemoglobin, myoglobin, peroxidase, catalase, and at least 5 different cytochromes (b, c, $c_1$, a, and $a_3$). The porphyrins are well known and are named according to the side-chain substituents which are found on the pyrrole rings of the base compound. Examples of known classes of porphyrins include coproporphyrins, etioporphyrins, mesoporphyrins, and protoporphyrins. The most abundant of these in nature are the protoporphyrins. Protoporphyrins contain 2 propionic acid groups, 4 methyl groups, and 2 vinyl groups. Fifteen different isomeric forms exist, depending on the sequence of substitution. The structure of the most abundant form, protoporphyrin(IX) (found in hemoglobin, myoglobin, and most of the cytochromes), is shown below.

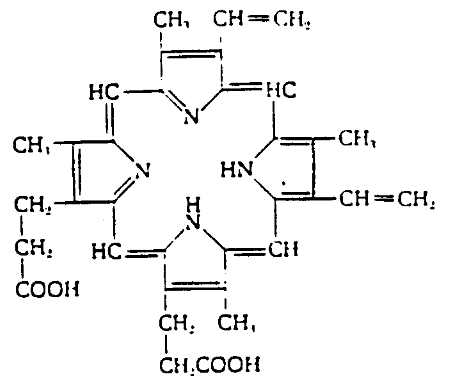

In addition to the naturally occurring porphyrin-containing molecules, synthetic porphyrin-like derivatives are also known. Several such compounds are disclosed in the prior art references previously cited. Derivatives are commonly formed by reacting one of the propionic acid side chains with a molecule that contains an amino or hydroxyl group in order to form an amide or ester link, respectively. The carboxylic acid side chains of the porphyrins also provides a convenient method of attaching these molecules to a solid support, as will be discussed later. However, functionalization of any porphyrin ring system is generally readily achieved by an organic chemist because of the reactive pyrrole rings. Thus, the number of porphyrin molecules that can be synthesized by a competent organic chemist is practically unlimited. Of these many compounds, those which are suitable for use in the present invention can be readily determined by their ability to bind oxygen. Oxygen binding is readily determined by ultraviolet spectroscopy as is well known to those skilled in the art. (See, for example, Brinigar et al, J.A.C.S. 96, 5597 (1974).) Porphyrin molecules or derivatives which are capable of forming an oxygen complex without greater than 50% oxidation after 1 hour under 0.2 atmosphere of oxygen are preferred.

Preferred porphyrin-containing compounds include porphyrins and alkyl esters of porphyrins, particularly those containing 1-4 carbon atoms per ester-forming alcohol. Also preferred are porphyrin derivatives in which a nitrogenase base is attached to a porphyrin through a carboxylic acid side chain. Such molecules generally have the formula PCO-X-$(CH_2)_y$-Z where the PCO-portion of the molecule is derived from a porphyrin having a carboxylic acid group of the formula PCOOH, X represents NH or O, y is 2-5, and Z represents a 5- or 6-membered aromatic, saturated, or ethylenically unsaturated ring containing one or two nitrogen atoms, with the proviso that any $CH_2$ can be replaced with a nonconsecutive O or NH (i.e., two Os, two NHs, or an O and an NH cannot be adjacent). Specific examples of nitrogen-containing rings are set forth in the following discussion of "nitrogenous bases."

Protoporphyrins are particularly preferred porphyrin ring-containing structures and protoporphyrin(IX) is most preferred.

In addition to the porphyrin or similar ring, the oxygen-binding porphyrin compound will contain a metal ion capable of bonding oxygen or the other ligand when chelated in the ring. Typical metal ions include iron, manganese, zinc, nickel, cobalt, and copper. Iron or cobalt in the +2 oxidation state is preferred. When $Fe^{2+}$ is present in a protoporphyrin ring system, the resulting complex is called protoheme, or more simply heme.

The final component in many of the oxygen binding compounds of the invention is a nitrogenous base chelated to the metal ion in one of the axial positions that remain after the porphyrin or other ring itself has formed a square-planer complex with the central metal ion. In proteinaceous oxygen carriers the nitrogenous base is often present as part of an amino acid residue of a peptide chain, usually an imidazole ring of a histidine residue. However, free (i.e., not bound by a covalent bond) nitrogenous bases may be present in both proteinaceous and non-proteinaceous oxygen carriers and are particularly preferred for the latter. Preferred nitrogenous bases include 5- and 6-membered aromatic, saturated, and ethylenically unsaturated rings containing 1 or 2 nitrogen atoms in the ring. These compounds may be substituted by one or more, preferably one, organic substituent, preferably an alkyl group (most preferably having 1-4 carbon atoms) or an alkyl group which is itself substituted with a hydroxyl or amino group. As discussed above, compounds in which one of these nitrogen-containing rings is co-valently bound to the porphyrin ring through a carboxylic acid side-chain on the porphyrin ring are also preferred. Free (i.e., non-covalently bound) nitrogenous bases which are preferred are those in which all hydrogens on electronegative atoms have been replaced by one or more of the substituents named above in this paragraph. Imidazole and pyrrolidine derivatives having a $C_1$-$C_4$ alkyl group substituent on the N-1 are particularly preferred, with 1-methyl imidazole being most preferred.

The nitrogenous base can be present when the oxygen bonding compound is added to the carrier fluid or the base may be present in the carrier fluid itself. In fact, the preferred embodiment of the present invention utilizes the nitrogenous base itself as the carrier fluid. However, other organic solvents such as hydrocarbons, chlorinated hydrocarbons, dimethylformamide, dimethylsulfoxide, alcohols, and the like, can also be used as the carrier fluid. Mixed solvent systems are also suitable. Examples of non-nitrogenous solvent systems include toluene, methylene chloride, mixed solvents containing methylene chloride and methanol, hexafluoroethylene, and the like. Aqueous solutions are also suitable, although it is essential that, when a non-proteinaceous porphyrin-like molecule is used as the carrier, a nitrogenous base is selected which is capable of strongly chelating to the metal ion in order to prevent too rapid oxidation of the essential metal ion. Such bases can readily be selected from bases described herein using the spectrophotometric technique previously discussed which readily reveals both oxidation and complex formation. Nitrogenous bases which are covalently attached to the porphin ring as described above are preferred with aqueous systems.

Carrier fluids which are not miscible in water offer some advantages when oxygen is being extracted from water or an aqueous solution, such as seawater. Membranes with relatively large pores may be used to promote rapid oxygen transfer across the membrane since the two liquids will tend to stay separate and not mix in the pores. However, large pressure differences between the two surfaces of the membrane should be avoided under these circumstances to avoid forced mixing of the liquids.

Oxygen binding compounds of the invention may be free in solution or may be attached to a solid support material which is capable of circulating with the carrier fluid. For example, a carboxylate group on a porphyrin molecule may be reacted, either directly or through a divalent linking molecule, with a hydroxyl or amino group of a circulating particle, such as a finely divided polymer. Typically, a linking molecule of the formula A-L-B will be used, where A is a group capable of reacting with a functional group in the oxygen binding compound (preferably a hydroxyl or amino group when the oxygen binding compound contains a carboxylate), L is any covalently linked sequence of atoms which joins A to B and preferably comprises $-CH_2-$ or para-phenylene groups or a mixture thereof which provide a separation of 5 to 50 angstroms between A and B, and B is a functional group capable of forming a bond (preferably but not necessarily a covalent bond) with the circulating particle. Examples of L include $-(CH_2)_n-$ wherein n is from 1 to 20 and

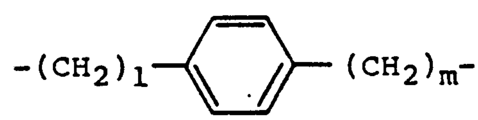

wherein l and m independently represent an integer from 0 to 10. B may be an amino, hydroxyl, carboxylate or other organic functional group of moderate reactivity, a functional group capable of forming a highly reactive organic functional group such as a carbene or nitrene (for example, nitrene precursors include azides from which nitrenes can be generated by photolysis), or even non-reactive portions of a molecule such as a large alkyl or aromatic hydrocarbon portion which binds tightly to a non-polar surface by hydrophobic interactions.

The circulating particle is not limited by its chemical structure as long as oxygen binding capacity (easily measured as described above) is retained for the oxygen carrier when it is attached to the circulating particle. Circulating particles can be prepared by grinding from solid polymers, glass, or other solid substrates, preferably to average diameters of 5-10μ. Circulating particles as described in U.S. Patent 4,427,416 can readily be adapted to the practice of other embodiments of the present invention or can be modified by replacing the hemoglobin described therein with one or more of the other oxygen binding compounds described herein.

The technology relating to the production and use of oxygen permeable membranes (as well as membranes permeable to other ligands) is well known and need not be set forth here in detail. See, for example, "Membrane Technology", Kirk-Othmer Encyclopedia of Chemical Technology, 3rd Edition, John Wiley and Sons, New York, Volume 15, pages 92-131, and the references cited therein. Certain preferred embodiments of suitable membranes are discussed here, however, in order to exemplify the invention.

The selection of a membrane for use in the present invention is not limited other than by the ability of the membrane to pass oxygen while retarding the passage of other components of the fluid environment from which the oxygen is being extracted. Since the present invention can be used to extract oxygen both from, for example, air and seawater, it will be desirable to select a membrane based on the purpose for which it will be used. Most important synthetic membranes are formed from organic polymers, and there are extensive tabulations of permeability coefficients for various

gas/polymer systems now in existence. See, for example, Van Amerongen, Rubber Chem. Technol. 37, 1065 (1964); Allen et al, J. Member. Sci. 2, 153 (1977); Yasuda et al in Brandrup et al Eds., Polymer Handbook, Second Edition, John Wiley and Sons, New York, 1975, p. 111; and Bixlar et al in Sweeting, Ed., the Science and Technology of Polymer Films, Vol. II, John Wiley and Sons, New York, 1971, p. 85. In addition to oxygen permeability, inertness to the external fluid environment and the internal carrier fluid are also required. Such properties of polymers are also well known or can readily be determined by exposure of the membrane to the carrier fluid and external environment.

The physical microstructure of the membrane is not important so long as the membrane performs the function described herein. Accordingly, dense films, porous membranes, and asymmetric and composite membranes are suitable. The macroscopic form of the membrane is also relatively unimportant although hollow fibers are preferred over flat sheets or tubular membrane configurations since hollow fibers are self-supporting and thus eliminate the need for expensive support materials. In fact, hollow fiber cartridges in which a plurality of gas permeable hollow fibers are connected in parallel between two manifolds at opposite ends of each tube can readily be adapted for use in the present invention. For example, Romicon manufactures a hollow fiber cartridge 3 inches in diameter and 43 inches long containing 660 hollow fibers joined to manifolds at opposite ends of the cartridge. The hollow fibers have a surface area of 2.5 $m^2$ and volume of 647 ml and are in the form of a composite membrane with an internal silicone rubber skin formed on a polysulfone layer. The cartridge walls form a chamber around the hollow fibers through which the carrier fluid can be transported. Fluid from the environment, e.g. seawater, is transported through the inside the hollow fibers (i.e., the interior of the fibers is the outside of the closed container) where extraction of oxygen into the fluid carrier takes place.

When the environmental fluid from which oxygen is extracted is an aqueous fluid, a polymer having a high permeability to oxygen is particularly preferred because of the low oxygen pressure which exists in water. Silicone rubber, natural rubber and poly(phenylene oxide), all of which have high permeability to oxygen, are particularly preferred. Also preferred is poly(trimethylsilylpropyne), often abbreviated as PMSP. This material is described in J. Amer. Chem. Soc., 105, 7473 (1983) which reports that PMSP has oxygen permeability 10 times better than silicones (specifically polydimethylsiloxane in the comparison made). Another material of interest is porous polysulfone in the form of hollow fibers having an internal skin of silicone (e.g., polydimethylsiloxane). This composite material provides both strength and high oxygen transport. Composite fibers consisting of a porous outer layer and an oxygen permeable layer (here permeable is used in the traditional sense of transport by solution of oxygen in the membrane) on the inside of the fiber are preferred for use in extracting oxygen from fluids under pressure, such as seawater. Hollow fibers having interior diameters of 50 microns have been produced as have much larger hollow fibers having interior diameters of 2 millimeters. Smaller fibers have a greater resistance to pressure, with bursting strengths of 6,000 pounds per square inch having been recorded. Accordingly, small-diameter hollow fibers would allow extraction of oxygen at great depths in the ocean since a pressure of 2,000 pounds per square inch (132 atmospheres) exist at depth of 4500 feet. When working at shallow depths or when extracting oxygen from air, large diameter fibers are preferred since the larger fibers are rated up to 50 pounds per square inch bursting pressure and offer less resistance to flow, thereby reducing energy required to drive water or air through the fibers where extraction takes place. This is particularly true when large volumes of oxygen are desired to be extracted since a theoretical oxygen extraction of 1 litre per second requires that 3175 gallons of seawater must contact the membrane surface each minute. Efficiencies of extracting oxygen across membranes of 85% have been obtained in practice.

During operation, flow of carrier in contact with the second side of the membrane is balanced against oxygen flux which in turn depends on the oxygen concentration in the environment from which oxygen is being extracted and the rate at which this environment contacts the membrane. Higher oxygen carrier concentrations and faster carrier flow rates both operate to increase the rate of oxygen pick-up. High capacity oxygen carriers are therefore preferred since they decrease the required volume of carrier and minimize pumping requirements.

Preferred membranes of the invention, particularly those intended for use in an aqueous environment, should have minimal water and carrier fluid flux. Typically, water flux through the membrane is limited by selecting hydrophobic membranes, such as fluorocarbons. It is also possible to reduce water flux by using a water-immiscible solvent as the carrier fluid. For example, toluene can be used as the carrier fluid in a system in which heme bound to 1-methylimidazole is the oxygen carrier. Fluorocarbon carrier fluids are also possible.

It is of course possible to practice this aspect of the invention (i.e., pick-up of the ligand using the gill) in either a reversible or non-reversible manner; i.e., to remove oxygen from the carrier and reuse it or to merely trap oxygen in closed container. When the invention is carried out in a reversible (cyclic) manner, an oxygen unloading step must be present in addition to the loading step described above. While oxygen unloading is separate from the oxygen extraction process itself, it will be helpful to consider various ways which oxygen can be unloaded from the binding compound for use as free oxygen. For example, a chemical alteration which oxidizes or inactivates the oxygen carrier is able to cause release of all the bound oxygen. For example, ferricyanide oxidation of heme to the ferric state is a chemical means for unloading the absorbed oxygen. In this and other chemical methods it is necessary to use a regeneration cycle to reactivate the oxygen carrier if it is to be used again. For example, dithionite can be used to reduce the active sites and render them reactive toward oxygen once again.

The unloading process need not require a chemical treatment since simply decreasing the oxygen pressure in the vicinity of the oxygen carrier can be used to unload oxygen. In the absence of a chemical unloading step the system requires no regeneration. The system can thus be repetively cycled between the loading and unloading operations with great simplicity.

A particularly preferred method of unloading oxygen from a carrier involves the use of an electrochemical unloading system. Such a system is desired elsewhere in this specification.

When oxygen is being extracted from air, high permeability is not as important. In any event, the present invention has advantages over passive diffusion systems since the partial pressure of oxygen in the carrier fluid itself is essentially zero at all times until the oxygen binding compound is saturated. Accordingly, a constant gradient across the membrane exists in practice since the oxygen bound to the carrier compound will normally be transported to a second location where the oxygen will be unloaded prior to saturation.

Although the gill apparatus of the invention as described herein comprises a combination of a membrane-containing chamber, a carrier fluid, and an oxygen binding compound, it will be readily recognized that each of these individual components can be supplied separately for assembly into a working unit by the ultimate user of the apparatus. For example, the membrane-containing chamber can be manufactured and shipped separately from the chemicals which form the carrier fluid and oxygen binding compound. In fact, this is a preferred method for storage of the individual parts since it minimizes leakage through the membrane and deterioration of the oxygen binding compound itself.

The gill apparatus and the method relating to this aspect of the invention can be used in any application where it is desirable to remove oxygen from an environment and concentrate it in a second location, whether or not it is combined with the electrochemical apparatus to produce a total oxygen-extracting system.

The individual components of an electrochemical cell used in the practice of the method of the invention relating to electrochemical unloading are readily available to those skilled in the art although certain combinations of these components have not been previously known. For example, the electrochemical reactions themselves can be conducted in any electrochemical cell which has an anode compartment and a cathode compartment through which the appropriate fluids can be transported. For simplicity in the following discussion, it will be assumed that an oxygen carrier in which the oxygen binding state is a lower oxidation state and the nonbinding state is a higher oxidation state is being used in order to simplify discussion of anode and cathode compartments. However, it will be easily recognized that when an oxygen carrier in which the oxygen binding state is a higher oxidation state can readily be used by reversing the anode and cathode as described hereafter.

Considerable effort has gone into the design of electrochemical cells useful for conducting continuous chemical reactions, for example, cells used in the electrolysis of salt solutions to produce chlorine and sodium hydroxide. Although such cells do not represent preferred embodiments of the present invention, they can readily be adapted for use in the practice in the present invention. For example, the electrolytic cells disclosed in British Patent 2,009,795 and U.S. Patents 4,210,501, 4,214,958, and 4,217,401 can be adapted for use in the practice in the present invention by arranging for a carrier fluid containing heme to pass first into the anode chamber where the oxygen carrier is oxidized and oxygen is released (this chamber already being adapted for the collection of gas since chlorine is normally produced in this chamber) and then into the cathode chamber where the oxidized state oxygen carrier is reduced to a reduced state oxygen carrier which is again capable of binding oxygen.

However, such electrochemical apparatuses are not readily useable in those preferred embodiments of the present invention which involve unloading of oxygen in undersea applications where the carrier fluid is under high pressure as a result of contact with seawater at depths of 10 meters or more. Under these conditions, it is preferred that the carrier fluid containing the oxygen binding compound be enclosed within a sealed system and that all oxygen transfers occur through gas permeable membranes.

Typically, an apparatus used for the extraction of oxygen from seawater will comprise an oxygen loading station as described above in which an oxygen carrier is transported past an oxygen permeable membrane in contact with the environment where oxygen is loaded onto the oxygen binding compound. A carrier fluid containing the oxygen binding compound is then transported to an oxygen unloading station through a conducting system which seals the carrier fluid from both the external seawater environment and the internal environment of the chamber into which oxygen is being released. Typically, the internal volume of the system is constant since the carrier fluid is an incompressible liquid. However, a reserve container of carrier fluid and oxygen carrier can be attached to the system through a valve so that carrier fluid lost through the membrane to the external environment can be replaced. For purposes of illustration, a reduced-state oxygen binding compound, such as hemoglobin, is used in this example. The reduced state oxygen carrier is oxidized at the anode of an electrochemical cell, and the carrier fluid containing free dissolved or gaseous oxygen is transported to a separate location where the oxygen passes into the interior environment in which it will be consumed through an oxygen permeable membrane. The carrier fluid containing the oxidized state oxygen carrier is then circulated back through a cathode compartment of the electrochemical cell where the reduced state oxygen carrier is reformed by electrochemical reduction. The carrier fluid containing the reduced state oxygen carrier is then transported back to the oxygen loading station, after which the entire operation can be repeated.

When the invention is practiced in this manner, a key component is the oxygen permeable membrane through which oxygen is removed from the extracting apparatus. This membrane can be of the same type described above in connection with the oxygen loading station. However, since oxygen is present in the carrier fluid at a high concentration capable of rapid diffusion through the membrane, a much smaller membrane is needed than for the original oxygen extraction step itself. Typically, an oxygen unloading station designed to release gaseous oxygen into a second environment will have only about 1/5 to 1/20 the surface area of the original oxygen extracting membrane. All of the design characteristics of the membrane used at the oxygen loading station apply equally to the oxygen unloading membrane. However, it is preferred to pass the carrier fluid through the interior of hollow fibers and to collect oxygen in the space surrounding the fiber bundles.

Although, as indicated previously, the design of the electrode and cathode compartments are not critical to the practice of this invention, certain embodiments are preferred. For example, a parallel plate electrochemical cell in which anode and cathode compartments alternate in order to reduce the volume occupied is a preferred embodiment. In order to maximize contact of the carrier fluid containing the oxygen binding compound with the anode and cathode, it is preferred that the anode and cathode compartments have a thickness of no more than 5 millimeters, preferably no more than 1 millimeter. Particularly preferred are porous electrodes, such as vitreous carbon or polytetrafluoroethylene covered with a thin layer of an inert metal such as gold or platinum. The carrier fluid in such an embodiment passes through the porous electrodes, the spaces of which form the anode and cathode compartments.

In a preferred embodiment, the electrochemical cell compartments will contain an inlet and outlet in each anode and cathode compartment through which fluid can be conducted. Of course, one skilled in the art will recognize that anode and cathode compartments can be changed merely by reversing the electrical leads. The present example is illustrated by assuming that the first electrode compartment is an anode compartment and that an oxygen carrier which binds oxygen in the reduced state is being used. A container is attached by means of a conduit to the outlet of the anode compartment. The conduit may be separate or may be formed entirely or in part from the walls of the container or the anode compartment. Since oxidation takes place in the anode compartment, the anode compartment when in operation will contain the carrier in the oxidized state and free oxygen in solution. When the free oxygen in solution passes through the conduit into the container, it is removed through a gas permeable membrane which forms at least one surface of the container. Since all oxygen is released by the electrochemical oxidation of the carrier, an extremely high concentration of oxygen can exist in the carrier fluid. Accordingly, a positive gradient across the gas permeable membrane can exist even if air or oxygen is present on the opposite side of the membrane. It is only necessary that the partial pressure of oxygen be lower in the chamber where oxygen is being collected for use than it is in the fluid inside the container. This is the meaning of the phrase "low partial pressure of oxygen" as used with respect to the oxygen unloading step of the invention.

The fluid is then transported through a second conduit attached to the container so that fluid which enters the container from the anode compartment contacts the membrane prior to exiting the container through the second conduit. This second conduit is attached to an inlet in the cathode compartment and can be formed in the same manner as the first conduit described above. The cathode compartment also contains an outlet through which the fluid passes on its way to pick up oxygen from the environment.

To continue the illustration of releasing oxygen, since oxygen is generally being produced for consumption, it is relatively easy to maintain a low partial pressure of oxygen on the gas-collecting side of the container membrane. If this oxygen is consumed by a human, animal, or fuel burning engine, the result is the same: reduction of the partial pressure of oxygen on the oxygen consuming side of the membrane, which maintains the pressure gradient and the high rate of oxygen removal from the system.

Of course, it is possible to consume the oxygen without isolating the oxygen in gaseous form. Oxygen in the carrier fluid may be transported to a fuel cell where the oxygen is consumed directly. In a preferred embodiment of the invention, the anode compartment is itself part of the energy generating fuel cell as well as being a place where oxygen is released from the carrier so that no transportation is required.

Fuel cells are of course well known and can easily be adapted to the process of the present invention. See, for example, U.S. Patent 4,215,182; U.S. Patent 4,075,396; and McDougall, Fuel Cells, John Wiley & Sons, New York (1976). The last-named reference is a comprehensive discussion of fuel cells.

If the ligand being removed from a waste stream is present only in small quantities, it is possible to concentrate the ligand by utilizing the binding affinity of the ligand carrier and to release the ligand in high concentration for ready reaction with the ultimate removing chemical. The method of the invention also provides a method for readily concentrating minute quantities of material which are to be removed by physical transport; e.g., trapping as a compressed gas or concentrated solution for later disposal.

It has been determined that an electrochemical unloading system will use only a small quantity of the energy that is available from oxygen which is extracted by the system. This calculation is shown below.

Electrochemical Loading/Unloading Calculations:

1) Loading will be preceded by a reduction of the carrier.
2) Unloading will be preceded by an oxidation of the carrier, lowering its affinity for $O_2$.
3) The difference in potential required between the anode (oxid) and cathode (red) is found from:

$$E_{tot} = E_{thermodynamic} + E_{iR\ (Joulean)} + E_{kinetic}\ \text{overpotential}$$

$E_{thermodynamic}$ = Potential determined by the Nernst relationship:

$$E_{sol} = E^{O'} - \frac{RT}{nF}\,1n\,\frac{R}{O}$$

Assume 50% load/unload cycle. The R/O ratio must change from 3:1 to 1:3

R = 1.987 cal/M °K
T = 298°K
$E_a = E° + 0.028$ V
F = 23,060 cal/Volt
$E_c = E° - 0.028$ V
$E_{thermo} = E_a - E_c = 56$ mV
$E_{iR}$ = Potential determined by solution resistance and current requirements
R = Specific resistance * electrode separation unit area
= 9.7 ohm-cm * 0.1 cm / 1.0 $cm^2$ = 0.97 ohm (in a 1 cm2 area)
i = 10 mA/$cm^2$ (this value will be determined large ly by mass transfer properties of the cell --flow rates, ultrasonics, etc. -- but this is a value roughly O.05 of that used by fuel cells and other bulk electrolytic processes)
$E_{iR}$ = 0.010 A * 0.97 ohm = 0.0097 V (9.7 mV)
$E_{kinetic}$ overpotential is very small. The exchange current and Heterogeneous electron transfer rate constant for heme in 1-methylimidazole at a gold electrode are very large. ($k_h°' = 1.57 \times 10^{-1}$ cm/sec)
This term can be ignored.

$E_{tot}$ = 56 mV + 9.7 mV = 66 mV to be applied across the electrodes.
Power consumption for the load/unload cycle:

P = E * i
= 0.066 V * 0.010 A
= 0.00066 watts per $cm^2$ of electrode surface area to produce $O_2$. This counts both the loading and unloading sides of the electrochemical process.
1.0 $cm^2$ of electrode surface area produces:

$$\frac{0.001\ A}{1.0\ cm^2} \times \frac{1.0\ coul/sec}{1.0\ A} \times \frac{1\ mole\ e^-}{96500\ coul^1} \times \frac{1\ mole\ O_2}{1\ mole\ e^-} \times \frac{22.4\ 1\ O_2}{1\ mole\ O_2} \times \frac{60\ sec}{1\ min} = 0.00014\ \frac{1\ O_2}{min}$$

Therefore, the power required to electrochemically modulate the carrier to transfer O2 is: 4.7 watts per liter of O2 per minute. Thus, even with less than 50% efficiency of the entire transfer, there will be no more than 10 watts/1 $O_2$ per min required. It should be noted that since it is the carrier that is being changed, this same energy calculation will be valid to the removal of other ligands.

As shown by these calculations, it is possible to carry out the redox process on the oxygen carrier directly without the intervention of any modifier, promoter, linker, or mediator. However, such materials may be included if desired. A mediator is a small molecule also present in a circulating carrier fluid which serves to transport charge from the electrode surface to the oxygen carrier. A modifier or promoter is a molecule attached to the electrode surface which facilitates electron transfer without itself undergoing a redox reaction. A linker is a molecule which binds the carrier to the electrode surface where the redox process can take place.

The invention will now be described with reference to certain preferred embodiments shown in the Figures.

Figure 1 shows in schematic form four essential operations of a preferred method or apparatus of the invention along with the form of the oxygen carrier which exists after each step (using oxygen as the illustrative ligand). If the

invention is being practiced in its broadest manner (i.e., no oxidation or reduction of the carrier), only the loading and unloading stations will be present, and the carrier will cycle between them. The oxygen carrier used to illustrate the invention in Figure 1 has a reduced oxygen-binding state and an oxidized nonbinding state. The four stations and any conduits which may be necessary to connect them are isolated from the environment from which oxygen is being extracted except for contact with this external environment through a gas permeable membrane (not shown) at the loading station. Circulating into the loading station is the reduced state oxygen carrier in the carrier fluid. The reduced state oxygen carrier is capable of binding oxygen, so that any oxygen which diffuses through the gas permeable membrane at the loading station becomes bound to the oxygen carrier. The thus-formed bound oxygen complex in the carrier fluid is then transported to an oxidizing station where the reduced-state oxygen carrier is electrochemically oxidized to an oxidized-state oxygen carrier, thereby releasing free oxygen into the carrier fluid. The carrier fluid containing the oxidized state oxygen carrier and the free oxygen is then transported to an unloading station where free oxygen is removed. Alternately, the oxidizing station and the unloading station may be physically located in the same area when the oxygen is to be consumed by a fuel cell. When gaseous oxygen is the desired end product, the unloading station is generally physically separated from the oxidizing station. When gaseous oxygen is being produced at the unloading station, it will pass from the carrier fluid into the environment in which the oxygen is to be utilized through a gas permeable membrane, a valve, or some other device which isolates the carrier fluid from the oxygen utilizing space. After all or part of the free oxygen has been removed from the carrier fluid, the carrier fluid containing the oxidized-state oxygen carrier is then transported to a reducing station where the oxygen carrier is reconverted into its original reduced state. The reduced-state oxygen carrier is then ready for transport back to the loading station where the cycle can be repeated, as will normally be desired.

Figure 2 shows in schematic form the operation of a generalized apparatus of the present invention in which oxygen is released in gaseous form. The apparatus comprises a container 1 which isolates the interior of the container from contact with fluid environment 2 from which oxygen is being extracted and fluid environment 2' into which oxygen is being released. Oxygen enters container 1 through gas permeable membrane 3 and exits container 1 through gas permeable membrane 3'. Inside container 1 is a carrier fluid 5 which contains oxygen binding compound 6 either in reduced form (6a) or oxidized form (6b) depending on its location within the container. Carrier fluid 5 containing reduced state oxygen carrier 6a enters the portion of the container 1 which forms oxygen loading station 1a. Oxygen which passes through membrane 3 binds with oxygen carrier 6a to form a bound oxygen complex 7 which is then transported along with carrier fluid 5 to oxidizing station 1b. In oxidizing station 1b complex 7 contacts anode 8 which is given a positive electrochemical potential by battery 9. Contact of bound oxygen complex 7 with anode 8 produced oxidized state oxygen carrier 6b and free oxygen, both of which are transported along with carrier fluid 5 to that portion of container 1 which comprises unloading station 1c where oxygen diffuses into environment 2' through membrane 3'. Carrier fluid 5 then transports oxidized state oxygen carrier 6b into that portion of container 1 which comprises reducing station 1d. Contact of oxidized state oxygen carrier 6b with cathode 10, which has been given a negative electrochemical potential by battery 9, converts oxidized state oxygen carrier 6b into reduced state oxygen carrier 6a. Carrier fluid 5 containing reduced state oxygen carrier 6a is then transported back to loading station 1a after which the cycle can be repeated.

Figure 3 shows a schematic diagram of an embodiment of the invention in which oxygen is directly utilized in a fuel cell without release of the oxygen in gaseous form. Only that part of the apparatus which is different from the apparatus shown in Figure 2 is shown in Figure 3. Oxygen loading station 1a is accordingly not shown. Carrier fluid is transported in the direction of the arrows. When carrier fluid containing the bound oxygen complex (not shown) enters anode compartment (oxidizing station) 1b, oxygen carrier 6a (not shown) is oxidized to nonbinding oxidized state oxygen carrier 6b (not shown) by contact with anode 8. Free oxygen is then transported directly through membrane 3' into the adjoining fuel cell. In the embodiment shown, the oxygen electrode of the fuel cell is attached directly to membrane 3' to expedite oxygen diffusion. The fuel cell is an otherwise conventional fuel cell comprising an electrolyte, a hydrogen electrode, and a source of hydrogen. Since membrane 3' is directly attached to anode 8, oxidizing station 1b and oxygen unloading station 1c are in the same physical location. Carrier fluid 5 transports oxidized state oxygen carrier 6b (not shown) to reducing station 1d where reduced state oxygen carrier 6a (not shown) is formed by contact with cathode 10 identically as in Figure 2.

Figure 4 shows a schematic diagram of a particularly preferred embodiment of the invention using a hollow fiber cartridge 1a as an oxygen loading station, an electrochemical reactor comprising anode and cathode compartments which respectively define oxidizing station 1b and reducing station 1d, and a second hollow fiber cartridge 1c as an oxygen unloading station. The two hollow fiber cartridges and the electrochemical reactor, together with conduits which connect them and a pump which provides motive force to carrier fluid 5 together comprise container 1. Hollow fiber cartridge 1a comprises oxygen permeable membrane 3 in the form of bundles of hollow fibers (3a). Seawater from the environment (2) is flowed around the hollow fibers while carrier fluid 5 containing oxygen binding compound 6 (not shown) passes through the interior of the hollow fibers. In another preferred embodiment (not shown), seawater passes through the interior of the hollow fibers while the carrier fluid contacts the hollow fibers on their outer surfaces. The oxygen binding compound binds oxygen from seawater to form a complex 7 which is isolated from the seawater environment by the gas impermeable plenums 4 (manifolds) into which one end of each hollow fiber is inserted. Complex 7 is transported through conduit 11 to an electrochemical reactor 12 where the oxygen carrier is oxidized at anode 8 and releases oxygen into carrier 5. Free oxygen in carrier 5 then passes to unloading station 1c, which in this preferred embodiment consists-of a smaller hollow fiber cartridge having gas impermeable plenums 4 connected to hollow fiber bundles 3'a, where free oxygen in carrier fluid 5 passes through gas permeable membrane 3' into gas collecting space 13 which is in contact with the environment 2' into which oxygen is being released. Carrier fluid 5 containing oxygen binding compound 6b (not shown) in its oxidized form is then passed back through the electrochemical reactor 12 where reduction take place at cathode 10, making the oxygen binding compound ready to bind oxygen again. Carrier fluid 5 is then transported by means of a pump 15 through conduit 16 back to oxygen loading station 1a where the process is repeated.

Although the apparatus of the invention as described herein comprises a combination of a membrane-containing chamber, a carrier fluid, and an oxygen binding compound, it will be readily recognized that each of these individual components can be supplied separately for assembly into a working unit by the ultimate user of the apparatus. For example, the membrane-containing chamber can be manufactured and shipped separately from the chemicals which form the carrier fluid and oxygen binding compound. In fact, this is a preferred method for storage of the individual parts since it minimizes leakage through the membrane and deterioration of the oxygen binding compound itself.

The apparatus and method of the invention can be used in any application where it is desirable to remove oxygen from one location and concentrate it in a second location. For example, there are many applications in which the oxygen is present as a contaminant in a fluid, and removal of oxygen therefrom is desired. For example, oxygen degrades food products such as beer, wine, and orange juice, and removal of oxygen from these fluids greatly enhances the shelf storage life of the commodity.

In other applications, it is desirable to increase the concentration of oxygen above that which is present in a given environment. For example, persons afflicted with lung disorders who require a high concentration of oxygen for ease of breathing are now mostly limited to bottled oxygen, and movement of such persons is accordingly severely restricted. Recently, some portable units for producing oxygen-enriched air for medical uses have been marketed (Passwater et al, Am. Lab. 3,21 (1971)). An oxygen extractor of the type described herein can readily replace these units which rely on membranes alone to provide oxygen-enriched air. Portable units of the invention, powered by batteries, can also be used to increase oxygen concentration in mines and in other locations where the oxygen content of air is less than that required to support human life. In fact, the process of the present invention provides a viable alternative to the liquification and distillation processes by which oxygen is now generally obtained from air since the energy cost of extracting oxygen from air is less than that of liquification. One preferred embodiment uses a single state oxygen carrier for this aspect of the invention and accomplishes unloading by connecting the inlet of a compresser (which thus draws a partial vacuum) to the oxygen unloading station. Reduction of the partial pressure of oxygen results in release of oxygen from the oxygen carrier without requiring oxidation or reduction by an electrochemical cell.

Oxygen may also be extracted from water using the apparatus and method of the invention. Typical applications include supplying oxygen to free-swimming divers, to divers in submersible vehicles, to fuel cells which operate under water, and to various energy producing engines which require oxygen for combustion processes.

In all of these applications, electrochemical unloading and recycling of oxygen carriers provides an energy efficient means for utilizing oxygen carriers dissolved or suspended in carrier fluids. Calculations indicate that two square meters of electrode surface are sufficient to both oxidize and reduce oxygen carriers which are described herein (particularly the preferred heme/1-methylimidazole carrier) at a rate sufficient to supply oxygen to a 10 Kw internal combustion engine. The electrodes could be packed into two liters of space in the form of reticulated vitreous carbon. It is estimated that less than 10% of the energy that could be produced from the oxygen released by such a system would be required to run the redox systems in both directions.

Independent engineering evaluations have been carried out at the direction of the inventors. The two studies indicated that both underwater and above water applications are feasible. Figure 5, obtained from one of the studies, shows a comparison of the oxygen extractor (based on the characteristics of heme in 1-methylimidazole) and conventional storage methods. Cryogenic storage systems and high pressure storage systems are compared to the heme system on a weight basis versus mission time at various depths. The heme system results in system-weight savings over each of the conventional storage methods at varying payoff points. The payoff for the heme system over high pressure oxygen storage is at low mission times (20 hours at 2,000 meter depth and less). The heavy pressure vessels involved in high-pressure oxygen storage increase in weight linearly with respect to mission time and heavily penalize this oxygen storage mode versus the heme system. An additional comparison exists between the heme system and cryogenic oxygen storage. The heme system payoff occurs at 60 hours at 100 meters, 47 hours at 1,000 meters, and 33 hours at 5,000 meters. Therefore, the system of the invention has a clear advantage over cryogenic vessels for supplying oxygen in deep underwater dives of moderate duration.

An advantage inherent in the system of the invention is that there are no tank refilling requirements as exist for all other oxygen supply systems for underwater use. This is important expecially in the handling of cryogenic oxygen

where a significant threat of accidents and even explosions exists. The absence of a refilling operation further adds flexibility to the system of the invention by allowing operation in remote locations where oxygen supply capabilities, especially cryogenic supply, must normally be provided by a support craft.

Additional advantages are evident in Figure 10 from the same studies. A comparison of system weight for underwater vehicles powered by either batteries or by an engine or fuel cell utilizing oxygen extracted according to the method of the present invention is shown in Figure 6. It can be seen that weight payoffs occur in less than 1 hour for either a gasoline-spark ignition engine, a cryogenic hydrogen-acid fuel cell, or a hydrogen-methanol acid fuel cell utilizing oxygen extracted from water. It can be seen from the ratios of system weights that a propulsion system powered using oxygen extracted according to the method of the invention can have a weight penalty less than one-thirteenth of the weight penalty of battery powered propulsion units.

Comprehensive engineering calculations were carried out to determine whether or not the method of the invention could operate an underwater energy producing system without requiring more energy than that which could be produced from the oxygen extracted. The results of the engineering calculations for two types of units, a diver propulsion unit powered by a spark ignition engine and a commercial robot vehicle powered by an acid fuel cell, are shown in Tables 1 and 2 which follow.

Table 1

DIVER PROPULSION UNIT

CONVERTER: Spark Ignition Engine

FUEL: Gasoline

| | |
|---|---|
| **GENERAL: HEME POWER SYSTEM** | |
| Net Power | 0.75 KW |
| Gross Power | 0.954 KW |
| Total Energy | 1.5 KW |
| Depth Range | 0-100 m |
| Weight | 63.6 kg |
| Overall Efficiency | 23.55% |
| Oxygen Required | 12.18 l/min |
| **PROPULSION** | |
| Peak Power | 0.75 KW |
| Duration at Peak Power | 2 hours |
| **BATTERIES** | |
| KWH Storage | 0.0 |
| **HEME SYSTEM POWER REQUIREMENTS** | |
| Heme Unloading | 0.128 KW |
| Heme Pumping | 0.077 KW |
| C02 Disposal | 0.0 KW |
| Total Power Required | 0.205 KW |

Table 1 (Cont.)

DIVER PROPULSION UNIT

| | |
|---|---|
| SYSTEM WEIGHT (Power Only) | |
| Heme Oxygen Extractor | 57.0 Kg |
| Motor and Controls | 0.0 Kg |
| Power Converter | 6.0 Kg |
| Batteries | 0 Kg |
| Fuel System | 0.61 Kg |
| Total | 63.6 Kg |
| OXYGEN EXTRACTION SYSTEM | |
| Seawater Flow (50% eff) | 4872 l/min |
| Gill Frontal Area | 0.162 m2 |
| Seawater Velocity | 1 kt |
| Heme Fluid Flow Rate | 20.3 l/min |
| ENERGY DENSITY | 23.6 WH/Kg |

Table 2

COMMERCIAL ROBOT VEHICLE

CONVERTER: Acid Fuel Cell

FUEL: Hydrogen from Reformed Methanol

| | |
|---|---|
| GENERAL: HEME POWER SYSTEM | |
| Net Power | 10 KW |
| Gross Power | 14.5 KW |
| Total Energy | 400 KWH |
| Depth Range | unlimited |
| Weight | 1101 Kg |
| Overall Efficiency | 37.94% |
| Oxygen Required | 87.84 l/min |
| PROPULSION | |
| Peak Power | 10 KW |
| Duration at Peak Power | 40 hours |
| BATTERIES | |
| KWH Storage | 0.0 |
| HEME SYSTEM POWER REQUIREMENTS | |
| Heme Unloading | 0.920 KW |
| Heme Pumping | 0.560 KW |
| $CO_2$ Disposal | 3.02 KW |
| Total Power Required | 4.50 KW |

Table 2 (Cont.)

COMMERCIAL ROBOT VEHICLE

| | |
|---|---|
| SYSTEM WEIGHT (Power Only) | |
| Heme Oxygen Extractor | 412 Kg |
| Motor and Controls | 25 Kg |
| Power Converter | 257 Kg |
| Batteries | 0 Kg |
| Fuel System | 407 Kg |
| Total | 1101 Kg |
| OXYGEN EXTRACTION SYSTEM | |
| Seawater Flow (50% eff) | 35140 l/min |
| Gill Frontal Area | 1.17 $m^2$ |
| Seawater Velocity | 1 knot |
| Heme Fluid Flow Rate | 146. l/min |
| ENERGY DENSITY | 363 WH/Kg |

Table 1 shows the significant characteristics of the diver propulsion unit. Its gross power is approximately 1 KW with 25% of its power going back into the oxygen extraction system. The 0.75 KW net power output corresponds to 1 horsepower. The diver propulsion unit could just as well utilize a 1 KW methanol-fueled acid fuel cell.

Table 2 shows the significant operating characteristics of a potential commercial robot vehicle with a net power capability of 10 KW and a total storage capability sufficient to operate the vehicle for 400 KW hours. This vehicle could therefore work at full power for a duration of 40 hours or for longer periods at reduced power output. The energy converter proposed in the calculations is a phosphoric acid fuel cell fueled by reformed methanol. The gross power of the system is 14.5 KW with approximately 30% of the power being used to operate the combination of the oxygen extractor of the invention and a carbon dioxide disposal system. The net power is therefore 10 KW. Such robot vehicles now exist and are typically powered using silver-zinc battery systems. The advantages of the present invention are readily apparent in this situation since a comparable silver-zinc battery system would weight more than 3.6 times as much as an oxygen extraction system of the invention.

Accordingly, the present invention can readily be adopted to the propulsion of underwater vehicles which are now known. Figure 7 shows a conceptual submersible propulsion system using an oxygen extractor of the invention, shown in Figure 7 in a preferred embodiment using hollow fibers to extract oxygen from seawater and heme as an oxygen carrier.

Figures 8 and 9 show in block diagrams how an oxygen-consuming, hydrocarbon-consuming engine can be operated underwater in combination with the present invention. In Figure 8, oxygen extractor extracts oxygen from environmental water and furnishes oxygen to an oxygen storage vessel. An oxygen metering device determines when oxygen is needed by the engine, at which time oxygen is allowed to enter a chamber (oxygen mixer) where the oxygen is mixed with recycled engine combustion gasses. Oxygen for combustion is supplied from the oxygen mixture to the inlet of the engine along with fuel. Exhaust gas from the engine outlet passes to an exhaust gas cooler where condensed water is removed. The condensed water may either be discarded or utilized in the next stage of the apparatus, a carbon dioxide absorber. In the carbon dioxide absorber, carbon dioxide is converted (in the embodiment shown) to carbonic acid

which is then discarded. Absorption of carbon dioxide is controlled by a carbon dioxide absorption controller which allows unabsorbed carbon dioxide to bypass the carbon dioxide absorber when necessary for maintaining the proper gas volume to use in the engine. Gases leaving the carbon dioxide absorption controller and the carbon dioxide absorber pass to the oxygen mixer and the cycle is repeated.

Figure 9 shows the operation of Figure 8 with emphasis on the oxygen extractor itself. In the embodiment shown, seawater passes over a gill comprising a membrane in contact with the fluid loop comprising the carrier fluid and the oxygen carrier (the heme-fluid loop in the embodiment shown). The carrier fluid is transported through its cycle by means of a pump. When the carrier fluid and oxygen carrier reach the electrochemical cell, electrical unloading and production of gaseous oxygen occur. The oxygen carrier is then reconverted to the oxygen binding form as has been previously described, and passes back into circulation through the fluid loop. In the embodiment shown, unloading occurs inside a 1 atmosphere pressure vessel, and the gaseous oxygen produced is transported to an energy converter (an engine) which converts this oxygen and fuel stored in a fuel tank to energy. Heat produced in this process is either exhausted from the vessel or can be used to assist oxygen unloading if desired. Exhaust gases from the engine pass through cooling coils which exhaust heat to the surrounding seawater. A water trap removes combustion water which in the embodiment shown is transported to a carbonic anhydrase or other carbon dioxide absorber. The remaining exhaust gasses, including the carbon dioxide produced by combustion, also pass into the carbonic anhydrase reactor. Carbonic acid produced as a waste product is either stored inside the pressured vessel or dumped into the surrounding seawater. Unabsorbed gasses are transported back to the energy converter for another cycle.

Figure 10 shows a block diagram of a preferred oxygen extractor with emphasis on the details of the different stages (oxygen loading station, electrochemical cell, and oxygen unloading station). The oxygen loading station is a hollow fiber cartridge 3 inches in diameter and 43 inches in length containing 660 hollow fibers made of porous polysulfone with a silicon rubber skin on the inner surface. The surface area of the hollow fibers is 2.5 $m^2$ and the internal volume is 647 ml. The internal volume of the entire closed system is approximately 1 liter. In the embodiment shown, the oxygen carrier is heme and the carrier is 1-methylimidazole (concentration of heme: 20 mM). A gear pump causes carrier to flow through the closed system at 0.25 gallons per minute while water flows through the interior of the hollow fibers (25 gallons per minute, 20 psi). Circulating heme passes from the oxygen loading station to the anode of an electrochemical cell formed from teflon plates 3 mm thick and spaced 1 mm apart. The plates are 8 cm wide and 62.5 cm long, and 20 plates are stacked into an area 8 cm high, thereby providing a surface area of approximately 1 $m^2$. Sputtered gold forms the electrode on the surface of the plates. The electrochemical cell is connected to a voltage supply (20 amps at 0.1 volt). After leaving the anode chamber, oxidized heme and oxygen pass into a second hollow fiber cartridge, this time passing through the interior of the hollow fibers. This unloading station is identical with the hollow fiber cartridge loading station except that the cartridge is only 1 inch in diameter with a resulting surface area for the hollow fibers of 0.25 $m^2$ and a similarly reduced interior volume. Oxygen passes through the hollow fiber membranes and is available for use. The oxidized heme in the carrier fluid passes back into the electrochemical cell, this time entering the cathode compartment where the oxidized heme is reduced to an oxygen binding form. This heme now circulates back to the oxygen loading station (first hollow fiber cartridge) and the cycle is repeated. Polyvinyl chloride piping is used to transport the carrier fluid and heme between the various stations.

In addition to the undersea operations, engineering evaluations of above-water systems also indicate the feasibility of the present invention. The process and apparatus of the invention are cost competitive with cryogenic and pressure-swing adsorption systems, both of which typically yield a lower purity product (frequently contaminated with argon and lesser traces of hydrocarbons and carbon dioxide). Furthermore, the cryogenic systems are energy intensive when compared with the oxygen extraction system of the invention. For example, a typical 500 ton/day oxygen plant delivering only 95% oxygen requires about 31 watts/L/min of electrical power (Shreve et al, Chemical Process Industries, 4th ed., McGraw-Hill, 1977, p. 110). By comparison, the heme-based system requires about 5-10 watts/L/min. Even accounting for the energy required to compress the oxygen from the system of the invention, the potential energy savings are significant.

In an embodiment of the invention that is particularly useful for purifying oxygen from air, the electrochemical cell can be eliminated. An apparatus of the invention will then comprise the oxygen loading and unloading stations as described herein without the electrode compartments. Such an apparatus takes advantage of the reversible nature of the oxygen binding reaction itself. Reduction of the partial pressure of oxygen in the region of the membrane of the oxygen unloading station will result in release of oxygen, as is described in detail for immobilized hemoglobin in U.S. Patents 4,427,416 and 4,343,715. This can easily be accomplished when oxygen is collected as compressed, bottled gas by connecting the inlet port of a compressor to a chamber formed ont he exit ride of the membrane at the oxygen unloading station. Attached in this way, the compressor acts as a vacuum pump by reducing pressure on the second side of the membrane. This embodiment retains the advantages of a sealed oxygen carrier while further reducing the energy required to produce compressed, purified oxygen (i.e., the unloading and compression steps utilize a single power source).

In other embodiments of an apparatus useful for extracting oxygen from air, it is possible to replace the membrane

with a gas/liquid interface between air and a liquid carrier. Thus, the term "membrane" as used herein also encompasses such interfaces. For example, air can be bubbled into a liquid carrier fluid containing an oxygen carrier, which will selectively bind oxygen and allow the remaining gasses (mostly nitrogen) to escape. The carrier fluid and bound-oxygen complex is then transported to a second location where purified oxygen is released in any of the manners previously discussed. Under these conditions the previously described inventive step of contacting a "membrane" with an environmental fluid would comprise forming a bubble, whose interface would thereafter act as a membrane, in a liquid carrier fluid. The remaining steps would be carried out as described elsewhere in this specification.

In addition to these engineering studies, laboratory experiments have also demonstrated the feasibility of the present invention. In particular, the chemical and thermodynamic reversibilities of the electric cycling process has been demonstrated with cyclic voltammetry. For example, Figure 11 shows cyclic voltammetry of heme and 1-methylimidazole. Experimental conditions were as follows: initial potential, -325 mV; highest potential, 800 mV: lowest potential, -1,000 mV; sweep rate, 200 mV/sec: sweep segments, 3; initial sweep, negative.

In these experiments, oxidation and reduction took place by direct electrode electron transfer, not a chemical oxidant-reductant reaction. Although such materials are not essential, it is also possible to carry out the redox reactions in the presence of a modifier/promoter, a linker, or a mediator. These terms have the usual meanings which they have in electrochemistry. A mediator is a small molecule capable of carrying a charge from the electrode surface to the carrier molecule in solution. A modifier/promoter is a chemical substance attached to the surface of an electrode which facilitates transfer of electrons to the carrier without undergoing a redox process itself. A linker is a molecule which is attached to the electrode surface and binds the carrier molecule, thereby facilitating contact between the carrier and the electrode surface.

It will be recognized by those skilled in the art that many ligand carriers operate in a manner different from the preferred embodiments that are described in detail. For example, hemerythrins contain two iron atoms joined by a chemical bond. When oxygen acts as a ligand, each oxygen of a dioxygen molecule binds to one of the irons. Hemocyanins are similar to hemerythrins at their binding site but have copper instead of iron. Nevertheless, these molecules are still preferred carriers in addition to the tetradentate molecules previously discussed in detail. As can be seen from these examples, it is evident that a central single metal ion is not an essential characteristic of a ligand carrier useful in the practice of the invention. This is likewise shown by the articles discussed in the section of this specification entitled Background Art which show non-cyclic ligand carriers. As has been previously discussed, the essential characteristic of a ligand carrier useful in connection with the present invention is that it exhibit two reversibly interchangeable oxidation states which exhibit different binding affinities for the ligand being carried.

Figure 12 shows experimentally the ability to detect different oxygen binding techniques by spectroscopy. Three spectra are shown in Figure 12, all showing different forms of hemoglobin A. Spectrum 1 shows the reduced form of hemoglobin A with oxygen bound to the hemoglobin (form present at a potential of -50 mV). Spectrum 2 shows electrochemically oxidized hemoglobin showing that the oxygen is no longer bound (spectrum obtained at a potential of +600 mV). Spectrum 3 shows electrochemically re-reduced hemoglobin after removal of oxygen from the solution. When oxygen is replaced in the solution, the process can be repeated. The carrier was modulated with a direct electrode electron transfer, not a chemical oxidant/reductant.

To date, three experiements have been conducted that indicate the electrochemical modulation of dioxygen carriers resulting in the binding and release of dioxygen. These experiments were conducted on two classes of systems: natural macromolecule carriers in aqueous media and synthetic "heme-type" carriers in non-aqueous media. These experiments have been summarized in the table that follows.

Table 3

| CARRIER | SOLVENT | ELECTROLYTE | ELECTRODE | DETECTION |
|---|---|---|---|---|
| Hemoglobin | water | Phosphate | Au,C,Pt | Spectral |
| Co(PFP) | DMSO/Me-Im | TEACl | Au(C) | visual |
| Fe (CapP) | DMSO/Me-Im | TEACl | Au(C) | visual |

Experiments with Hemoglobin

These experiments are as described immediately above. Recent experiments included the presence of a mediator in the same solution (0.1 mM methylene blue) that facilitated the electron transfer to hemoglobin. This resulted in the reduction of the amount of energy necessary to cyclicly oxidize and reduce human hemoglobin from 30 Kcal/mole to 4 Kcal/mole. This simply makes the energetics of the process much more favorable.

Experiments with synthetic "heme-type" carriers

Two experiments have been carried out on these systems: one with a "picket fence" porphyrin containing Cobalt as the central metal ion (where the dioxygen binds) and one with a "capped" porphyrin containing Iron as the central metal ion. These two molecules are shown in Figure 13. The experimental procedure was identical in both cases, as was the solvent, electrode material, supporting electrolyte, and cell geometry. The concentration of carriers was high enough to produce an amount of released oxygen that would cause supersaturation of the dioxygen in solution. The solvent/electrolyte system contained: 90% Dimethylsulfoxide, 10% 1-methyl-imidazole and 0.1 Molar tetraethylammonium chloride. The reference electrode used was Ag/AgCl.

The cell is diagrammed in Figure 14. The working electrode (which behaves alternatively as either anode or cathode) is a gold transparent mesh sandwiched between two pieces of glass. This apparatus is placed in a "cup" that holds the counter electrode and reference electrode as well as some solution to be examined. The solution of interest is drawn up to the working electrode where it can be both controlled by the application of potentials and currents as well as observed through the glass sides. This observation was both spectroscopic and visual. The system was subjected to cyclic voltammetry in order to determine the redox potential of the carrier as well as to determine the presence of other competing chemical reactions.

After determining the redox potential (approx. 0.0V vs Ag/AgCl for the Co-Picket fence porphyrin and +0.1 V vs Ag/AgCl for the Fe-capped porphyrin in these solutions), the solutions were set to a potential that ensured that the carrier was in the reduced, dioxygen binding form. This was -0.400 V vs Ag/AgCl. The solution was allowed to achieve equilibrium for three hours, and the spectra taken through the working electrode showed this to be the case. The solution containing the carrier was contacted with air, at this point, to allow the binding of dioxygen to the carrier. Several hours of contact with the atmosphere ensured the equilibrium binding. At this point, the carriers were stepwise oxidized by jumping the potential more positive at the working electrode. The time between steps was roughly 30 minutes and small potential steps were taken so the entire duration of the experiment was approximately twelve hours (within 15 minutes). At the end of the oxidative potential steps, the solution showed bubbles of released gas around the electrode. The bubbles were not present in any other portion of the apparatus. A photograph of oxygen bubbles is shown in Figure 15. The grid shown is the mesh electrode. While the only electrode material that was used in these particular experiments was gold, when these carriers were examined using cyclic voltammetry for their redox activity, both showed adequate rates of electron transfer to be useful in this process. As a result, it appears that carbon is also a suitable electrode material for use.

When the same experiment was conducted on a solution identical to those employed above - but not containing a carrier- no gas was extracted from the air and no bubbles were produced anywhere in the cell.

The patents and other publications cited throughout this application are indicative of the state of the art. All patents and publications mentioned in this specification are herein incorporated by reference.

The invention now being fully described, it will be apparent to one of ordinary skill in the art that many changes and modifications can be made thereto without departing from the scope of the invention as set forth in the appended claims.

## Claims

**1.** A gill for extracting oxygen from an environment in contact with said gill, which comprises :

a container having an inlet, an outlet, and an oxygen permeable membrane which together at least in part define an inner space of said container, said membrane having a first surface adapted to be in contact with said environment and a second surface facing said interior space ;
a carrier fluid in contact with said second surface of said membrane in said first container ; and
a non-proteinaceous oxygen binding compound contained in said carrier fluid, wherein said compound comprises a tetradentate chelating molecule, a metal ion chelated in said molecule, and a nitrogenous base chelated to said metal ion.

**2.** The gill of claim 1 which further comprises :

means for circulating said carrier fluid and said oxygen binding compound contained in said carrier fluid from said inlet through said interior space and to said outlet of said first container.

**3.** The gill of claim 1 wherein said first container comprises :

a pair of manifolds, and

a plurality of oxygen permeable tubes connected in parallel by said pair of manifolds, said manifolds disposed at opposite ends of each oxygen permeable tube.

4. The gill of claim 1 wherein said membrane comprises silicone rubber, polytetrafluoroethylene, an alkylcellulose, or an acetylcellulose.

5. The gill of claim 1 wherein said carrier fluid is an organic solvent or a mixture or solution comprising an organic solvent.

6. The gill of claim 5 wherein said solvent is a nitrogenous base.

7. The gill of claim 6 wherein said solvent is 1-methylimidazole.

8. The gill of claim 1 wherein said compound comprises a protoporphyrin or an alkyl ester of a protoporphyrin.

9. The gill of claim 1 wherein said metal is iron, manganese, zinc, cobalt, nickel, or copper.

10. The gill of claim 1 wherein said metal ion is $Fe^{2+}$ or $Co^{2+}$.

11. The gill of claim 1 wherein said compound comprises a heme.

12. The gill of claim 1 wherein said compound is Fe(II) protoporphyrin IX or an alkyl ester or salt thereof complexed with 1-methylimidazole.

13. The gill of claim 1 wherein said container comprises a pair of manifolds and a plurality of oxygen permeable tubes connected in parallel by said pair of manifolds, said manifolds disposed at opposite ends of each oxygen permeable tube.

14. A method for removing oxygen from a fluid environment, which comprises :

contacting said environment with a first surface of an oxygen permeable membrane having a first and a second surface which separates said environment from an interior space of a closed container, and
contacting said second side of said membrane with a carrier fluid containing a non-proteinaceous oxygen binding compound which comprises a tetradentate molecule, a metal ion chelated by said molecule, and a nitrogenous base chelated to said metal ion, wherein said compound is not saturated with oxygen, thereby removing oxygen from said fluid environment and increasing oxygen concentration in said container.

15. The method of claim 14 wherein said fluid environment is air.

16. The method of claim 14 wherein said fluid environment is water.

17. The method of claim 14 wherein said compound is present at a concentration capable of binding at least 340 milligrams of oxygen per liter of carrier fluid when saturated.

**Patentansprüche**

1. Kieme zum Extrahieren von Sauerstoff aus einer Umgebung, die mit der Kieme in Kontakt ist, welche umfaßt:

einen Behälter mit einem Einlaß, einem Auslaß und einer sauerstoffdurchlässigen Membran, welche zusammen mindestens zum Teil einen inneren Raum des Behälters definieren, wobei die Membran eine erste Oberfläche, die so eingerichtet ist, daß sie mit der Umgebung in Kontakt ist, und eine zweite Oberfläche, die dem inneren Raum zugewandt ist, aufweist;

ein Trägerfluid in Kontakt mit der zweiten Oberfläche der Membran in dem ersten Behälter; und

eine nichtproteinhaltige sauerstoffbindende Verbindung, die in dem Trägerfluid enthalten ist, wobei diese Verbindung ein vierzähniges chelatisierendes Molekül, ein in dem Molekül chelatartig gebundenes Metallion und eine stickstoffhaltige Base, die chelatartig an das Metallion gebunden ist, umfaßt.

2. Kieme nach Anspruch 1, welche ferner umfaßt:

   Mittel zum Zirkulierenlassen des Trägerfluids und der in dem Trägerfluid enthaltenen sauerstoffbindenden Verbindung von dem Einlaß durch den inneren Raum und zu dem Auslaß des ersten Behälters.

3. Kieme nach Anspruch 1, worin der erste Behälter umfaßt:

   ein Paar von Verteileranschlüssen, und
   eine Vielzahl von sauerstoffdurchlässigen Röhren, die durch das Paar von Verteileranschlüssen parallel miteinander verbunden sind, wobei die Verteileranschlüsse an einander gegenüberliegenden Enden jeder sauerstoffdurchlässigen Röhre angebracht sind.

4. Kieme nach Anspruch 1, worin die Membran Siliconkautschuk, Polytetrafluorethylen, eine Alkylcellulose oder eine Acetylcellulose umfaßt.

5. Kieme nach Anspruch 1, worin das Trägerfluid ein organisches Lösungsmittel oder ein Gemisch oder eine Lösung ist, welche(s) ein organisches Lösungsmittel umfaßt.

6. Kieme nach Anspruch 5, worin das Lösungsmittel eine stickstoffhaltige Base ist.

7. Kieme nach Anspruch 6, worin das Lösungsmittel 1-Methylimidazol ist.

8. Kieme nach Anspruch 1, worin die Verbindung ein Protoporphyrin oder einen Alkylester eines Protoporphyrins umfaßt.

9. Kieme nach Anspruch 1, worin das Metall Eisen, Mangan, Zink, Kobalt, Nickel oder Kupfer ist.

10. Kieme nach Anspruch 1, worin das Metallion $Fe^{2+}$ oder $Co^{2+}$ ist.

11. Kieme nach Anspruch 1, worin die Verbindung ein Häm umfaßt.

12. Kieme nach Anspruch 1, worin die Verbindung Fe(II)-Protoporphyrin IX oder ein Alkylester oder ein Salz davon ist, das mit 1-Methylimidazol komplexiert ist.

13. Kieme nach Anspruch 1, worin der Behälter ein Paar von Verteileranschlüssen und eine Vielzahl von sauerstoffdurchlässigen Röhren, die durch das Paar von Verteileranschlüssen parallel miteinander verbunden sind, umfaßt, wobei die Verteileranschlüsse an einander gegenüberliegenden Enden jeder sauerstoffdurchlässigen Röhre angebracht sind.

14. Verfahren zum Entfernen von Sauerstoff aus einer fluiden Umgebung, welches umfaßt:

   Inkontaktbringen der Umgebung mit einer ersten Oberfläche einer sauerstoffdurchlässigen Membran, die eine erste und eine zweite Oberfläche aufweist, welche die Umgebung von einem inneren Raum eines geschlossenen Behälters abtrennt, und

   Inkontaktbringen der zweiten Seite der Membran mit einem Trägerfluid, das eine nichtproteinhaltige sauerstoffbindende Verbindung enthält, welche ein vierzähniges Molekül, ein durch das Molekül chelatartig gebundenes Metallion und eine stickstoffhaltige Base, die chelatartig an das Metallion gebunden ist, umfaßt, wobei die Verbindung nicht mit Sauerstoff gesättigt ist, und dadurch Entfernen von Sauerstoff aus der fluiden Umgebung und Erhöhen der Sauerstoffkonzentration in dem Behälter.

15. Verfahren nach Anspruch 14, worin die fluide Umgebung Luft ist.

16. Verfahren nach Anspruch 14, worin die fluide Umgebung Wasser ist.

17. Verfahren nach Anspruch 14, worin die Verbindung in einer Konzentration vorliegt, welche bei Sättigung mindestens 340 Milligramm Sauerstoff pro Liter des Trägerfluids binden kann.

## Revendications

1. Appareil du type branchies pour extraire de l'oxygène d'un environnement en contact avec ledit appareil, qui comprend :

   un récipient ayant une entrée, une sortie, et une membrane perméable à l'oxygène qui ensemble, au moins en partie, définissent un espace intérieur dudit récipient, ladite membrane ayant une première face adaptée pour être en contact avec ledit environnement et une seconde face faisant face audit espace intérieur ;
   un fluide vecteur en contact avec ladite seconde face de ladite membrane dans ledit premier récipient ; et
   un composé non protéiné se liant à l'oxygène, contenu dans ledit fluide vecteur, ledit composé comprenant une molécule chélatante tétradentée, un ion d'un métal chélaté dans ladite molécule, et une base azotée chélatée audit ion d'un métal.

2. Appareil du type branchies de la revendication 1 qui comprend en outre :

   des moyens pour faire circuler ledit fluide vecteur et ledit composé se liant à l'oxygène contenu dans ledit fluide vecteur, depuis ladite entrée, à travers ledit espace intérieur et vers ladite sortie dudit premier récipient.

3. Appareil du type branchies de la revendication 1, dans lequel ledit premier récipient comprend :

   une paire de collecteurs, et
   plusieurs tubes perméables à l'oxygène reliés en parallèle par ladite paire de collecteurs, lesdits collecteurs étant disposés aux extrémités opposées de chaque tube perméable à l'oxygène.

4. Appareil du type branchies de la revendication 1, dans lequel ladite membrane comprend du caoutchouc de silicone, du polytétrafluoroéthylène, une alkylcellulose, ou une acétyl cellulose.

5. Appareil du type branchies de la revendication 1, dans lequel ledit fluide vecteur est un solvant organique ou un mélange ou une solution comprenant un solvant organique.

6. Appareil du type branchies de la revendication 5, dans lequel ledit solvant est une base azotée.

7. Appareil du type branchies de la revendication 6, dans lequel ledit solvant est du 1-méthylimidazole.

8. Appareil du type branchies de la revendication 1, dans lequel ledit composé comprend une protoporphyrine ou un ester alcoylique d'une protoporphyrine.

9. Appareil du type branchies de la revendication 1, dans lequel ledit métal est du fer, du manganèse, du zinc, du cobalt, du nickel, ou du cuivre.

10. Appareil du type branchies de la revendication 1, dans lequel ledit ion d'un métal est du $Fe^{2+}$ ou $Co^{2+}$.

11. Appareil du type branchies de la revendication 1, dans lequel ledit composé comprend un hème.

12. Appareil du type branchies de la revendication 1, dans lequel ledit composé est la Fe(II) protoporphyrine IX ou un ester alcoylique ou un sel de celle-ci complexé avec du 1-méthylimidazole.

13. Appareil du type branchies de la revendication 1, dans lequel ledit récipient comprend une paire de collecteurs et plusieurs tubes perméables à l'oxygène reliés en parallèle par ladite paire de collecteurs, lesdits collecteurs étant disposés aux extrémités opposées de chaque tube perméable à l'oxygène.

14. Procédé pour éliminer de l'oxygène d'un environnement de fluide, qui comprend :

   la mise en contact dudit environnement avec une première face d'une membrane perméable à l'oxygène ayant une première et une seconde faces, cette membrane séparant ledit environnement d'un espace intérieur d'un récipient fermé, et
   la mise en contact de ladite seconde face de ladite membrane avec un fluide vecteur contenant un composé non protéiné se liant à l'oxygène qui comprend une molécule tétradentée, un ion d'un métal chélaté par ladite

molécule et une base azotée chélatée audit ion d'un métal, ledit composé n'étant pas saturé avec de l'oxygène, en éliminant ainsi l'oxygène dudit environnement de fluide et en augmentant la concentration en oxygène dans ledit récipient.

**15.** Procédé de la revendication 14, dans lequel ledit environnement de fluide est de l'air.

**16.** Procédé de la revendication 14, dans lequel ledit environnement de fluide est de l'eau.

**17.** Procédé de la revendication 14, dans lequel ledit composé est présent en une concentration permettant de lier au moins 340 milligrammes d'oxygène par litre de fluide vecteur lorsqu'il est saturé.

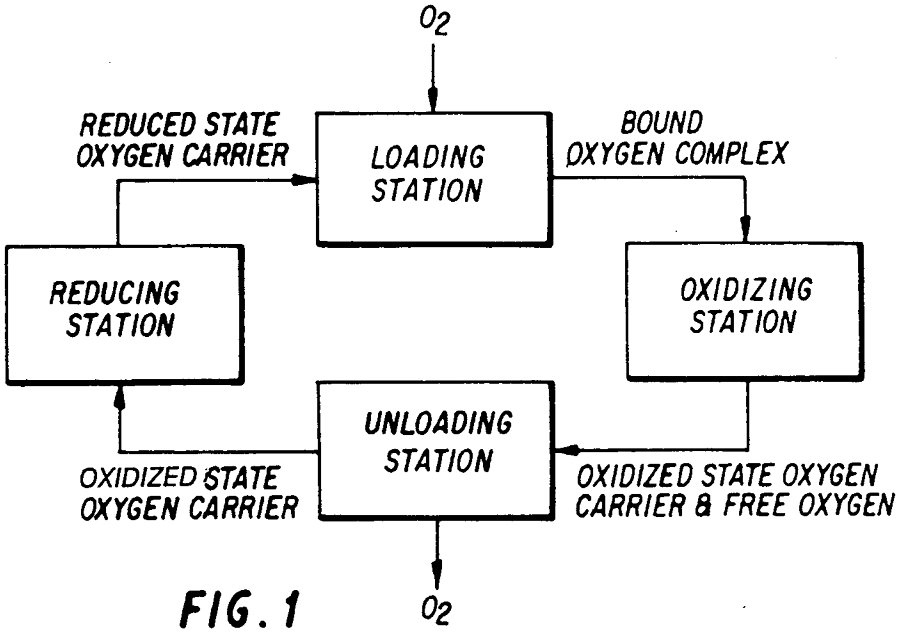
O2
REDUCED STATE OXYGEN CARRIER
LOADING STATION
BOUND OXYGEN COMPLEX
REDUCING STATION
OXIDIZING STATION
UNLOADING STATION
OXIDIZED STATE OXYGEN CARRIER
OXIDIZED STATE OXYGEN CARRIER & FREE OXYGEN
O2

FIG. 1

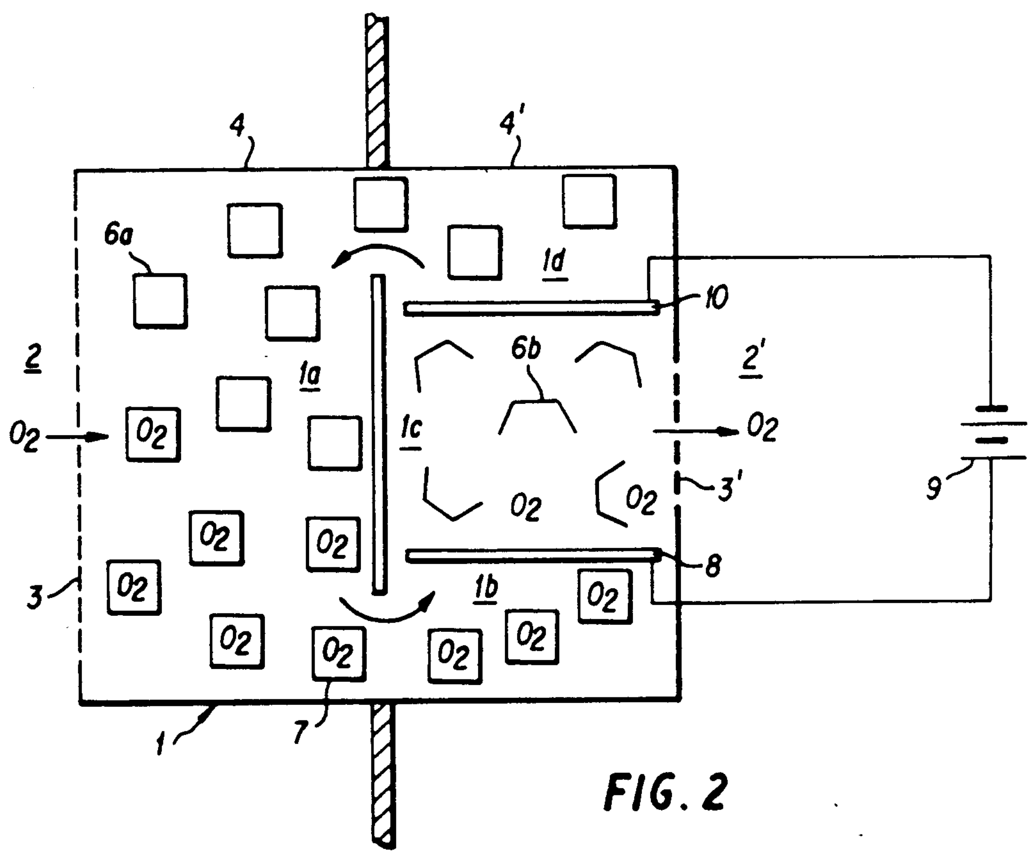
4
4'
6a
1d
10
2
1a
6b
2'
O2
1c
O2
3'
9
3
8
1b
7
1

FIG. 2

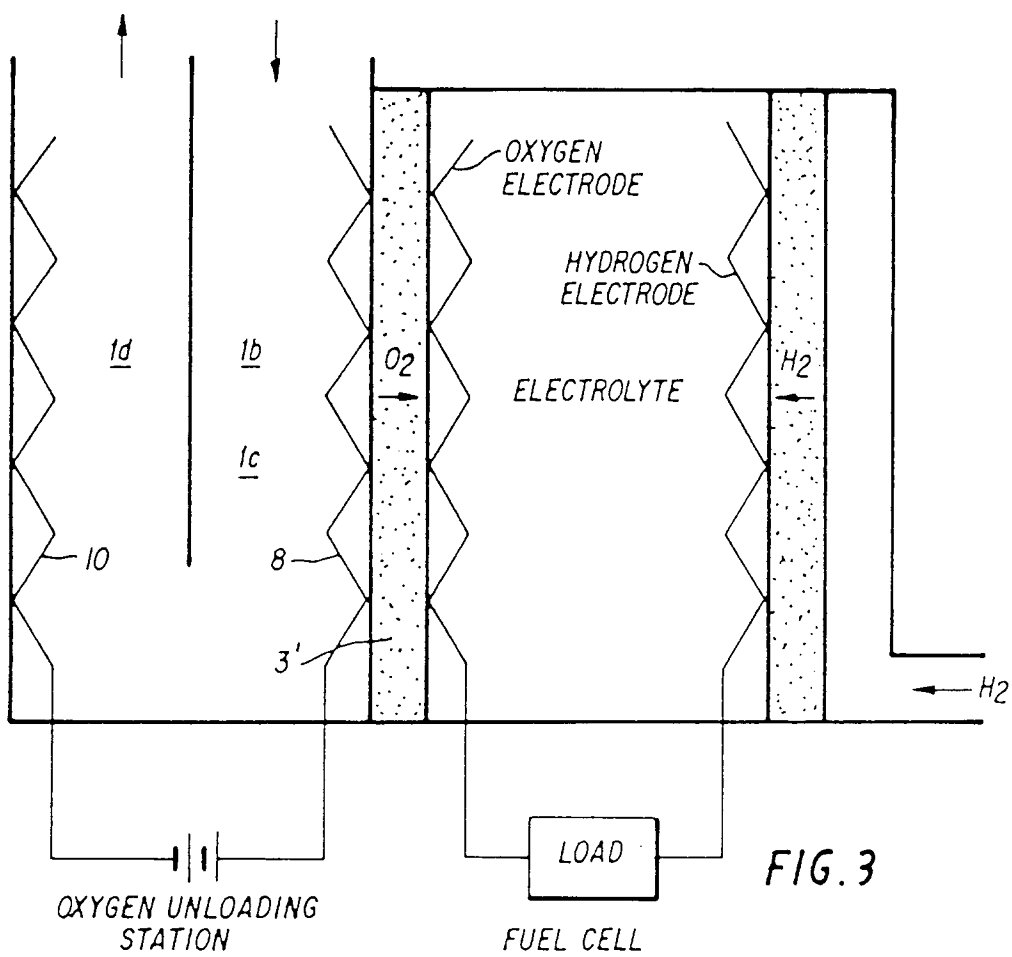
OXYGEN
ELECTRODE
HYDROGEN
ELECTRODE
1d
1b
1c
O2
ELECTROLYTE
H2
10
8
3'
H2
LOAD
OXYGEN UNLOADING
STATION
FUEL CELL

FIG. 3

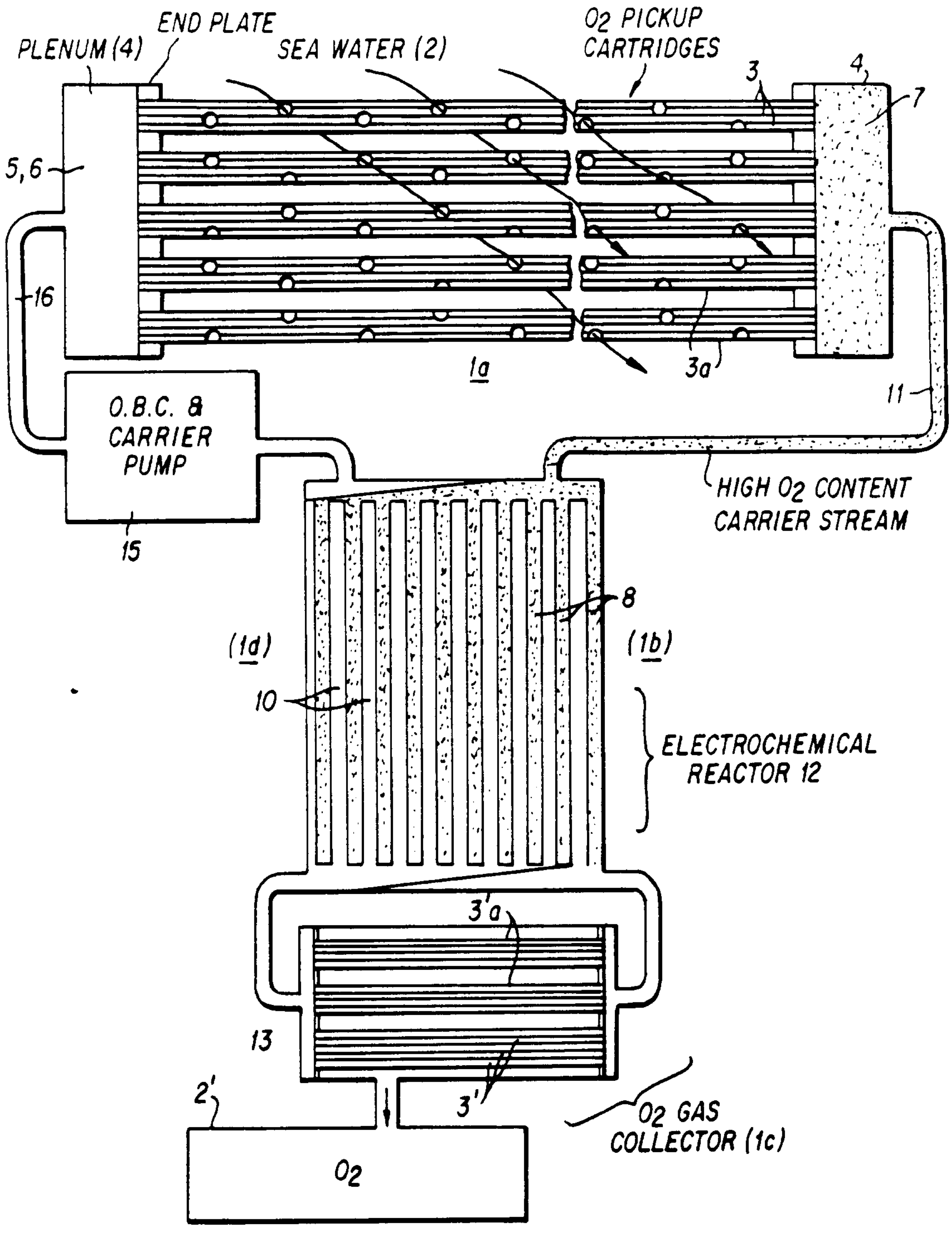


FIG. 4

$O_2$ EXTRACTION FLUID SYSTEM

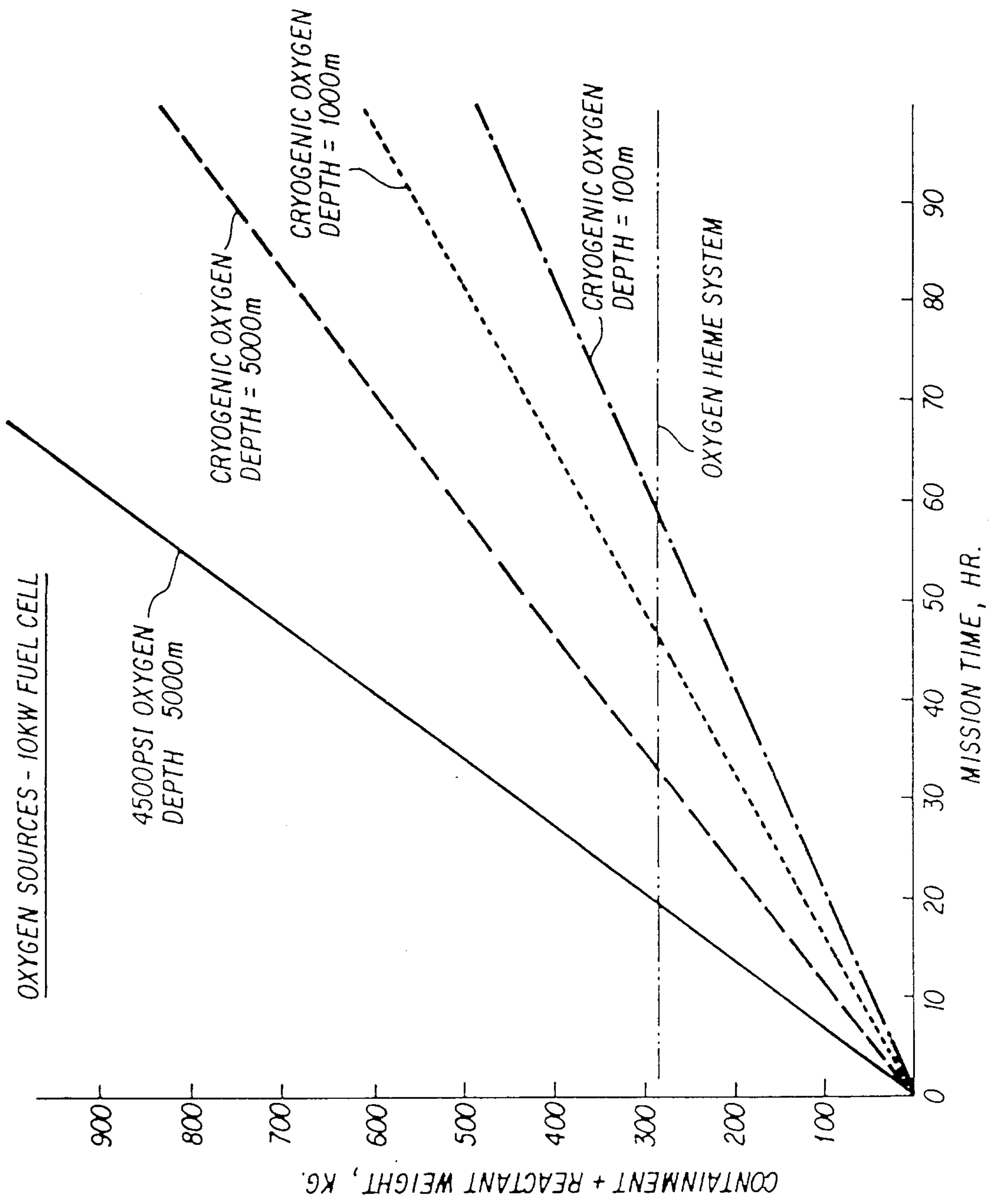
OXYGEN SOURCES - 10KW FUEL CELL
4500PSI OXYGEN
DEPTH 5000m
CRYOGENIC OXYGEN
DEPTH = 5000m
CRYOGENIC OXYGEN
DEPTH = 1000m
CRYOGENIC OXYGEN
DEPTH = 100m
OXYGEN HEME SYSTEM
CONTAINMENT + REACTANT WEIGHT, KG.
100
200
300
400
500
600
700
800
900
0
10
20
30
40
50
60
70
80
90
MISSION TIME, HR.

FIG. 5

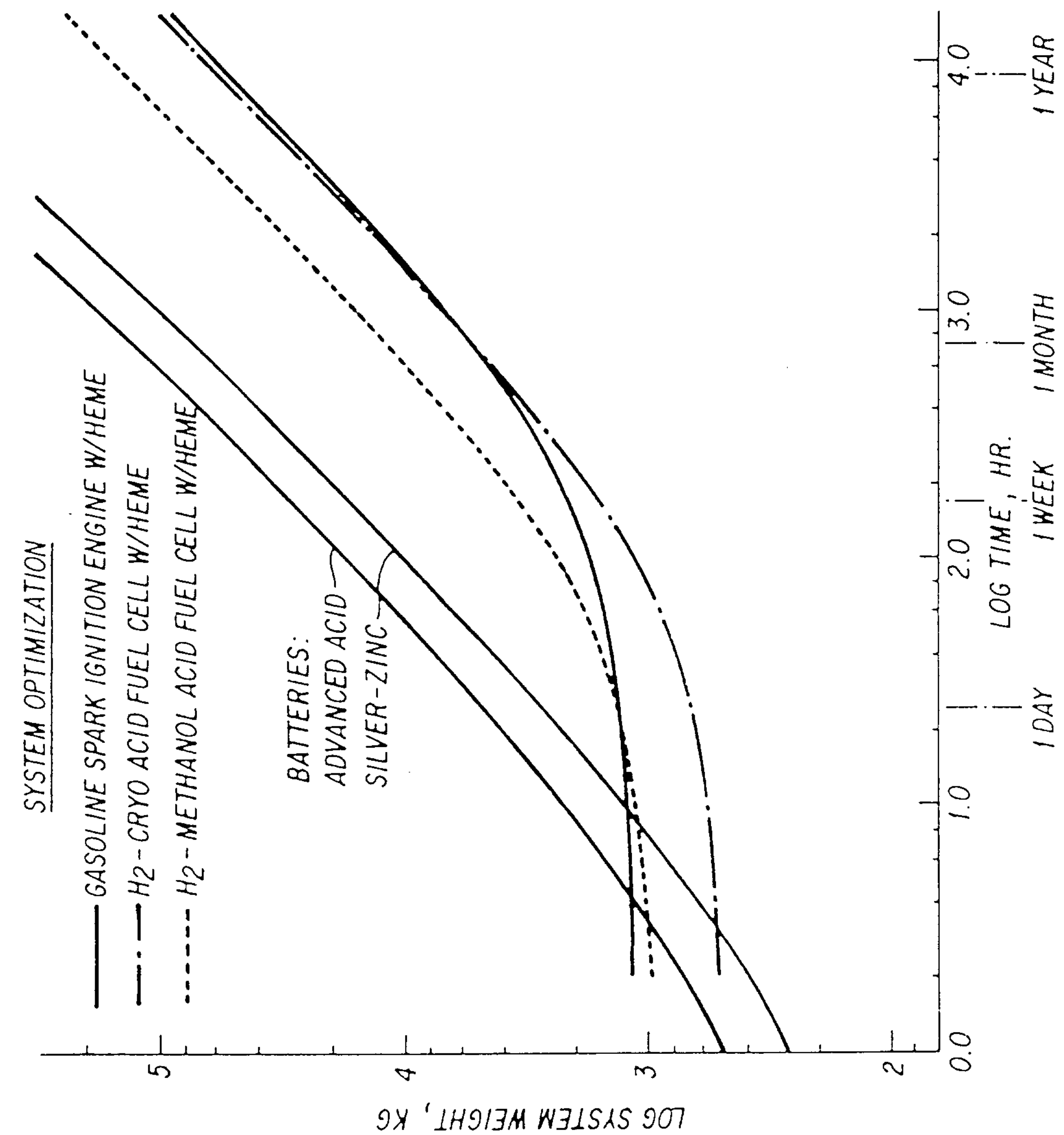
SYSTEM OPTIMIZATION
GASOLINE SPARK IGNITION ENGINE W/HEME
$H_2$-CRYO ACID FUEL CELL W/HEME
$H_2$-METHANOL ACID FUEL CELL W/HEME
BATTERIES:
ADVANCED ACID
SILVER-ZINC
LOG SYSTEM WEIGHT, KG
2
3
4
5
0.0
1.0
2.0
3.0
4.0
LOG TIME, HR.
1 DAY
1 WEEK
1 MONTH
1 YEAR

FIG.6

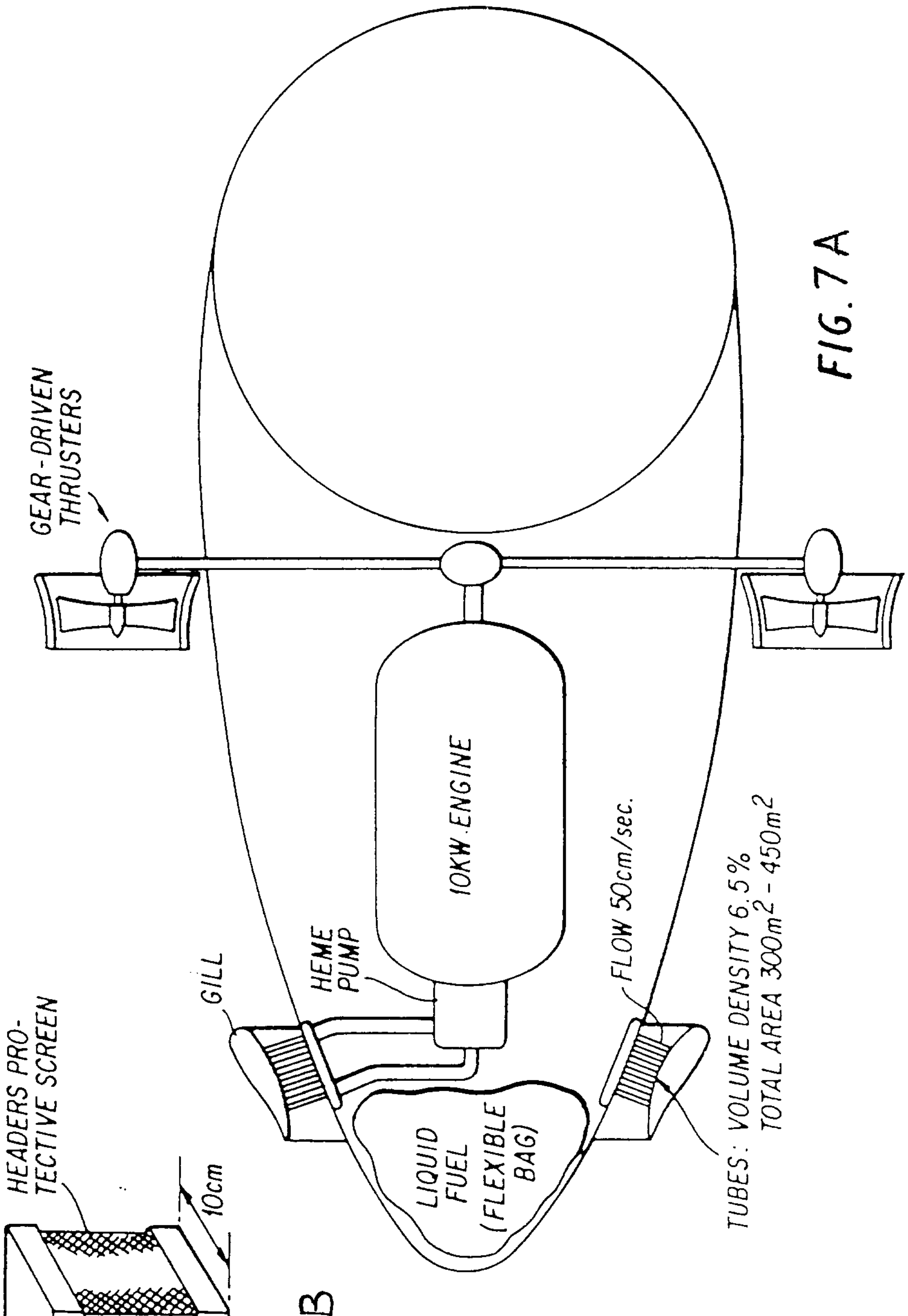
GEAR-DRIVEN THRUSTERS
10KW. ENGINE
GILL
HEME PUMP
FLOW 50cm/sec.
LIQUID FUEL (FLEXIBLE BAG)
TUBES: VOLUME DENSITY 6.5%
TOTAL AREA 300m2 - 450m2

FIG. 7A

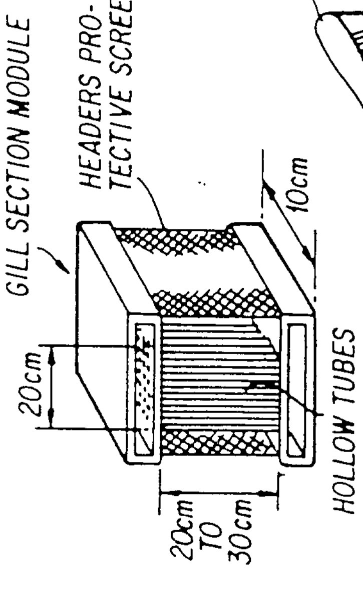
GILL SECTION MODULE
HEADERS PRO-TECTIVE SCREEN
10cm
20cm
20cm TO 30cm
HOLLOW TUBES

FIG. 7B

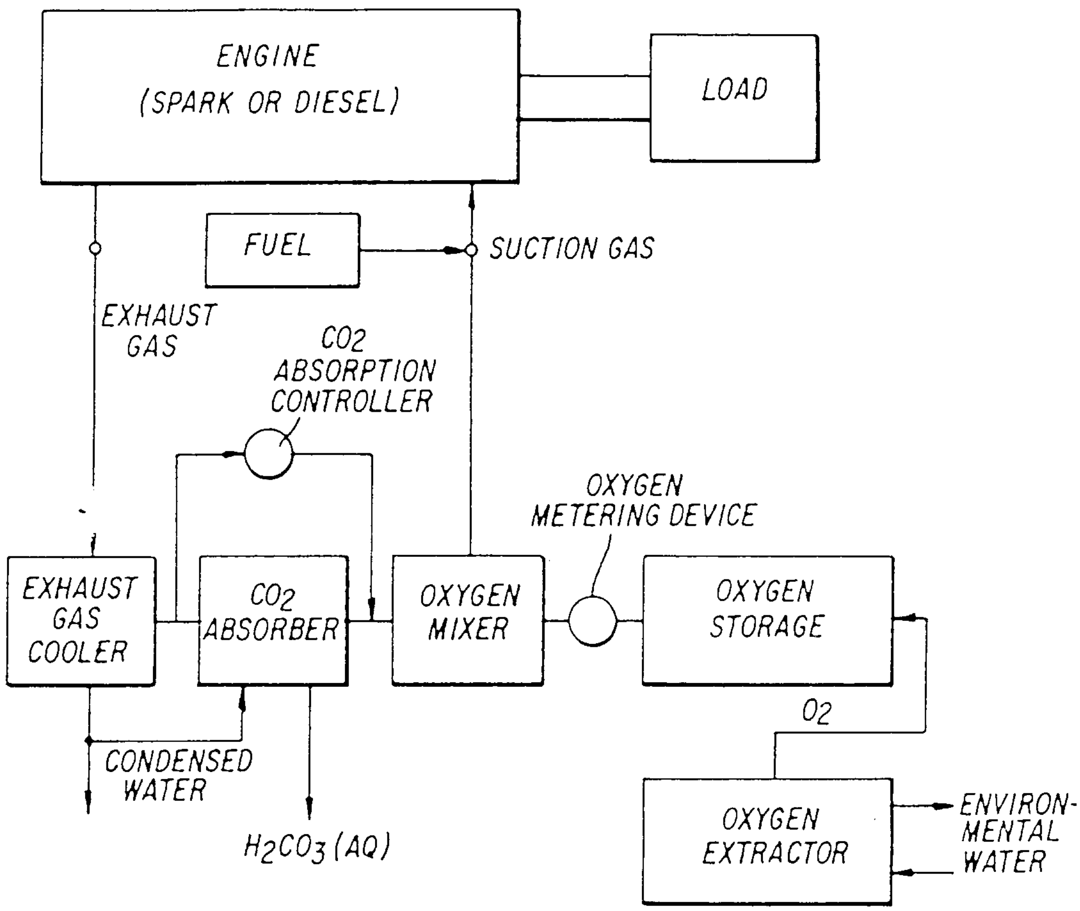
ENGINE
(SPARK OR DIESEL)
LOAD
FUEL
SUCTION GAS
EXHAUST GAS
$CO_2$ ABSORPTION CONTROLLER
OXYGEN METERING DEVICE
EXHAUST GAS COOLER
$CO_2$ ABSORBER
OXYGEN MIXER
OXYGEN STORAGE
$O_2$
CONDENSED WATER
$H_2CO_3$ (AQ)
OXYGEN EXTRACTOR
ENVIRON-MENTAL WATER

FIG. 8

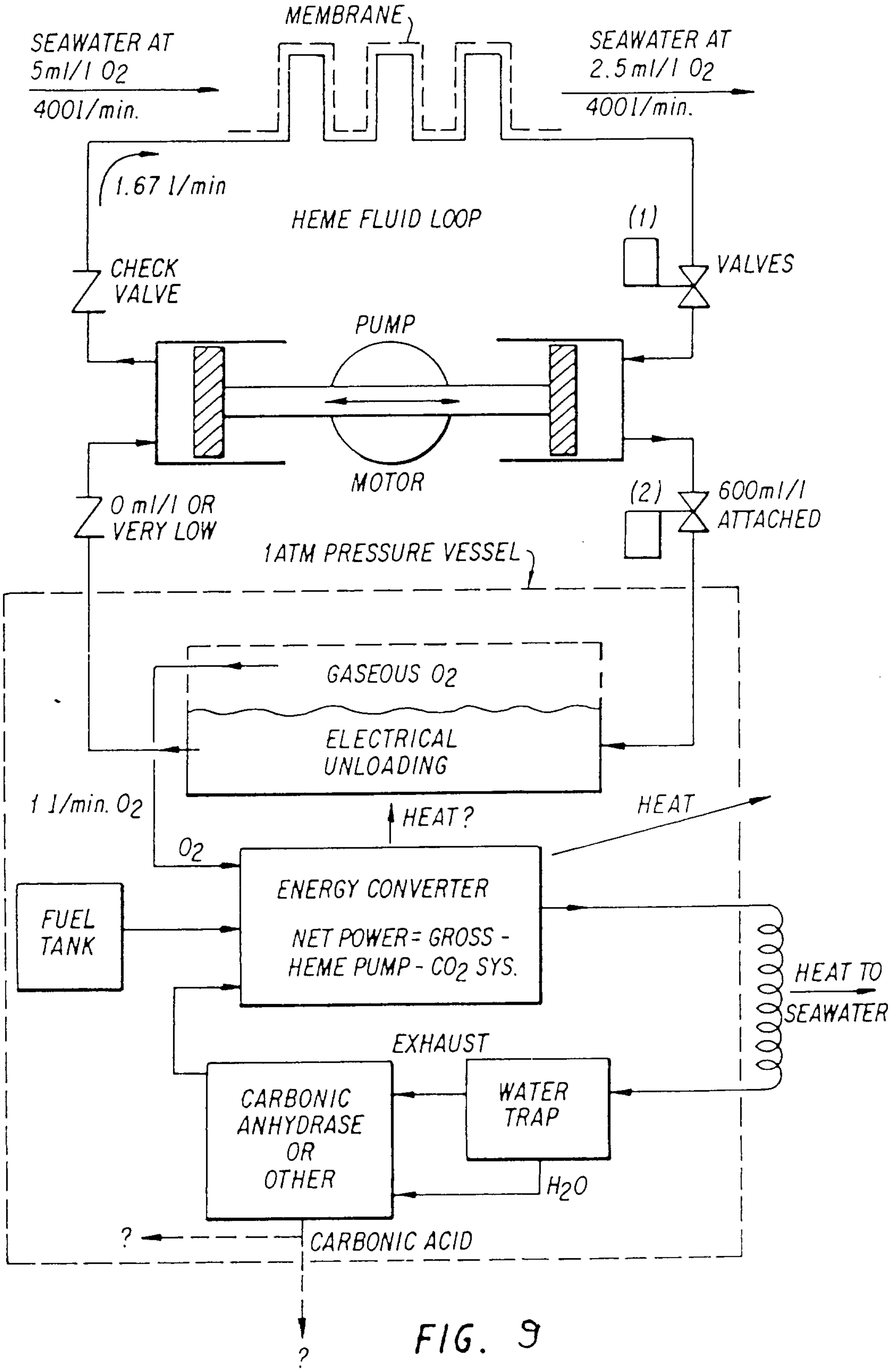
MEMBRANE
SEAWATER AT
5ml/l O2
400l/min.
SEAWATER AT
2.5ml/l O2
400l/min.
1.67 l/min
HEME FLUID LOOP
(1)
VALVES
CHECK
VALVE
PUMP
MOTOR
0 ml/l OR
VERY LOW
(2)
600ml/l
ATTACHED
1ATM PRESSURE VESSEL
GASEOUS O2
ELECTRICAL
UNLOADING
1 l/min. O2
HEAT?
HEAT
O2
ENERGY CONVERTER
NET POWER = GROSS -
HEME PUMP - CO2 SYS.
FUEL
TANK
HEAT TO
SEAWATER
EXHAUST
CARBONIC
ANHYDRASE
OR
OTHER
WATER
TRAP
H2O
?
CARBONIC ACID
?

FIG. 9

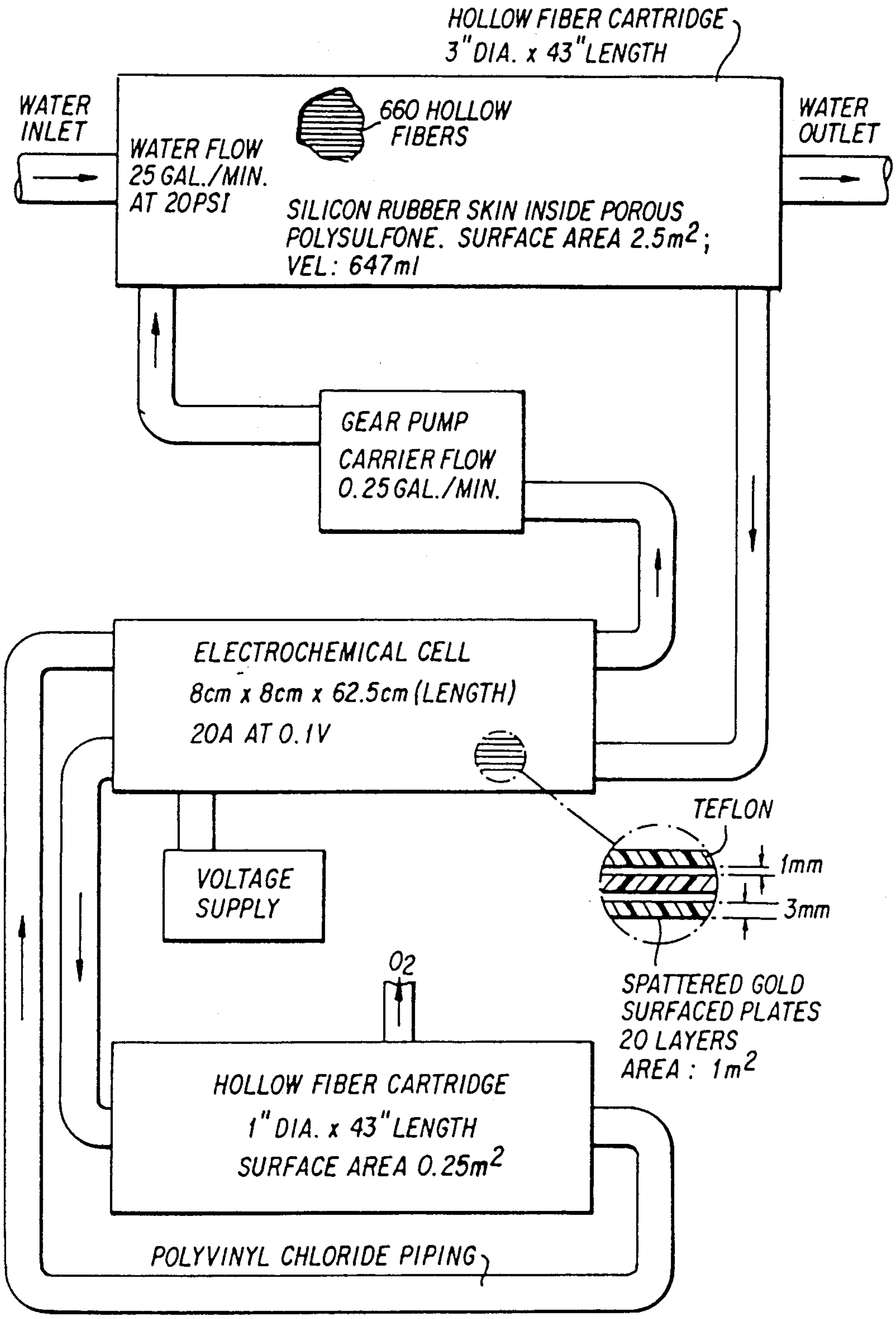
HOLLOW FIBER CARTRIDGE
3" DIA. x 43" LENGTH
WATER INLET
660 HOLLOW FIBERS
WATER FLOW
25 GAL./MIN.
AT 20PSI
WATER OUTLET
SILICON RUBBER SKIN INSIDE POROUS POLYSULFONE. SURFACE AREA 2.5m2;
VEL: 647ml
GEAR PUMP
CARRIER FLOW
0.25 GAL./MIN.
ELECTROCHEMICAL CELL
8cm x 8cm x 62.5cm (LENGTH)
20A AT 0.1V
TEFLON
1mm
3mm
VOLTAGE SUPPLY
O2
SPATTERED GOLD SURFACED PLATES
20 LAYERS
AREA : 1m2
HOLLOW FIBER CARTRIDGE
1" DIA. x 43" LENGTH
SURFACE AREA 0.25m2
POLYVINYL CHLORIDE PIPING

FIG. 10

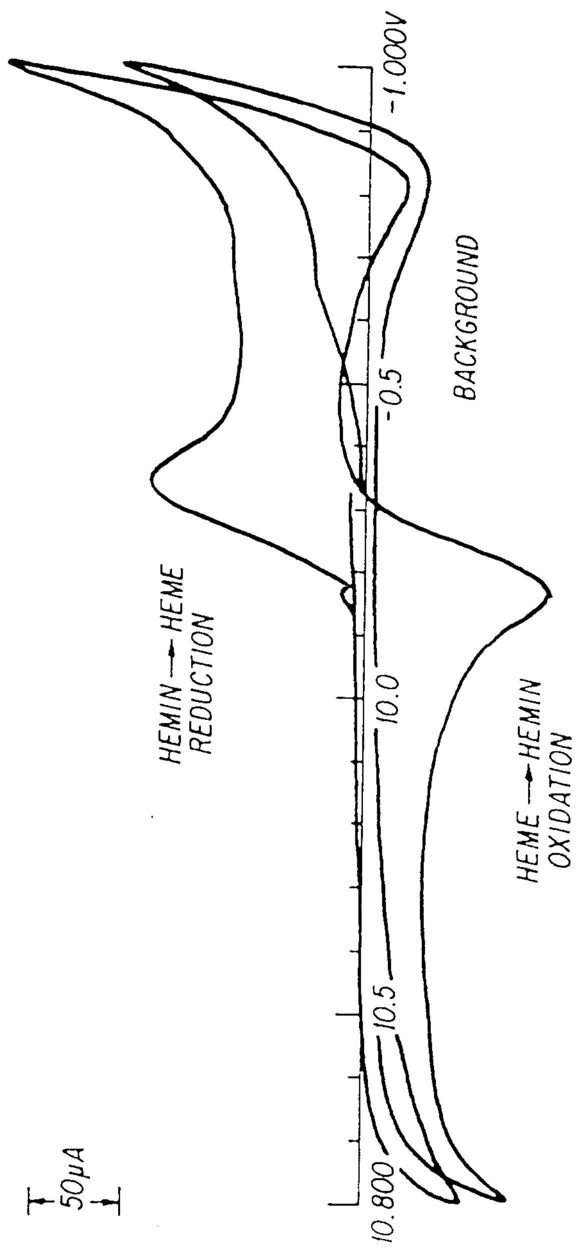
-1.000V
BACKGROUND
-0.5
HEMIN → HEME
REDUCTION
10.0
HEME → HEMIN
OXIDATION
10.5
10.800
50µA

FIG. 11

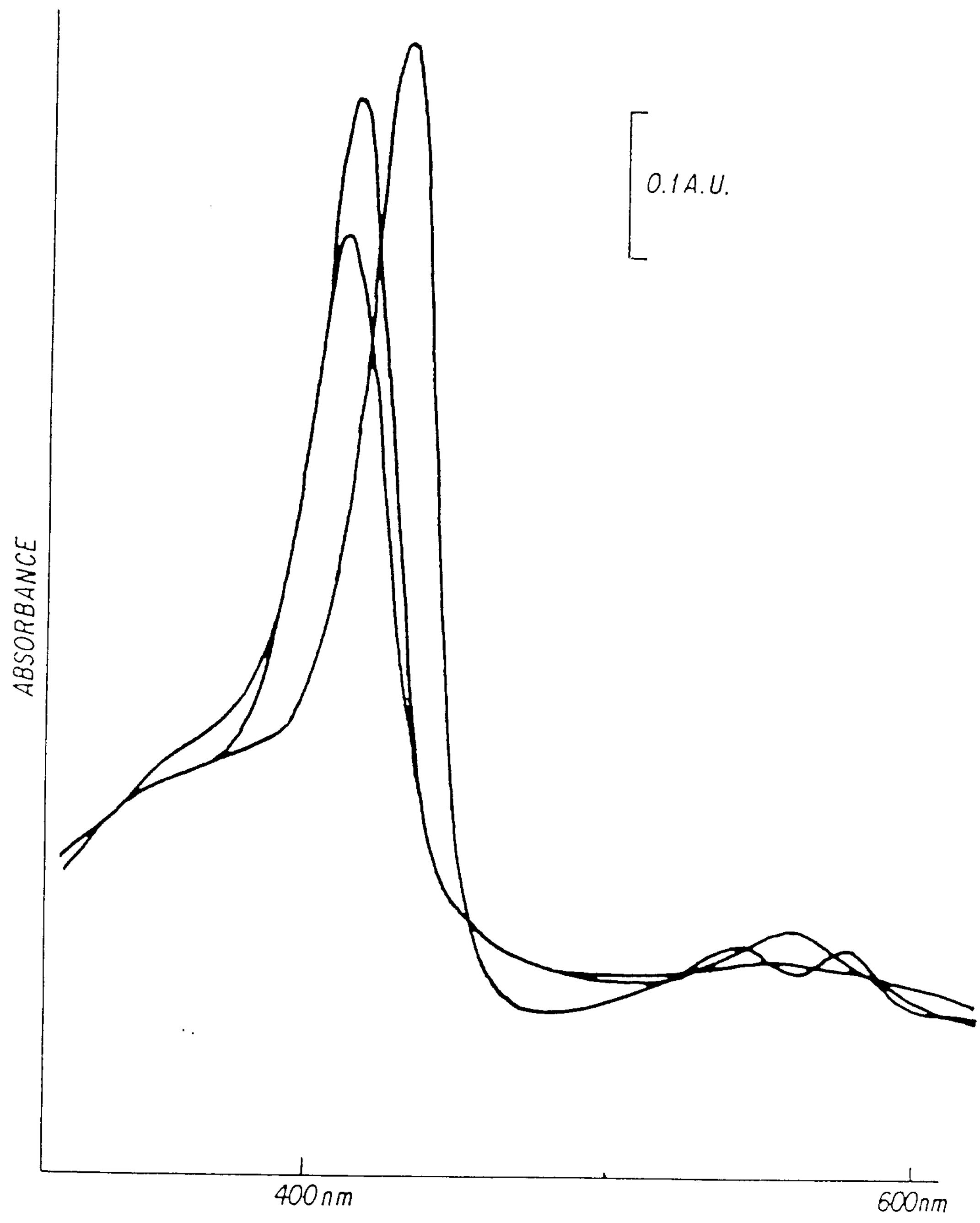


FIG. 12

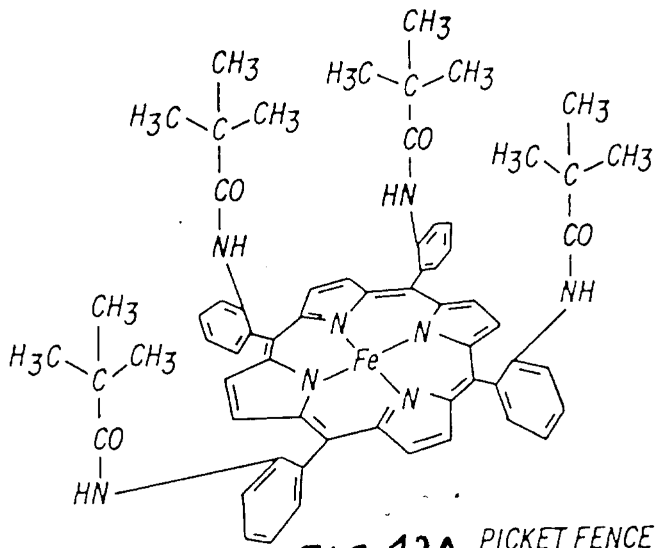

FIG. 13A PICKET FENCE PORPHYRIN SHOWN WITH IRON IN CENTER

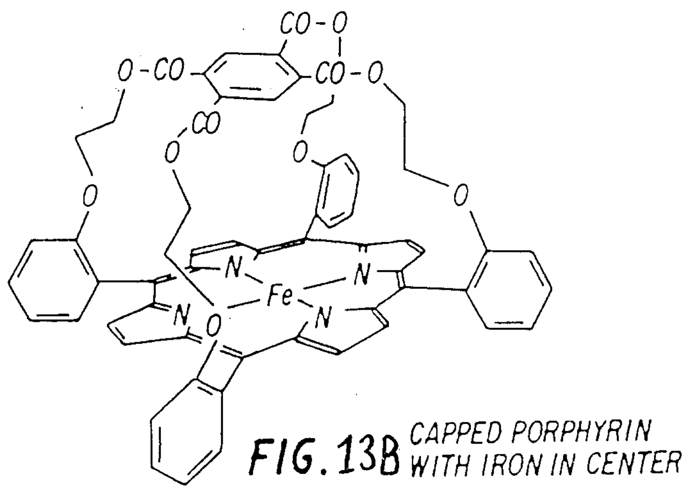

FIG. 13B CAPPED PORPHYRIN WITH IRON IN CENTER

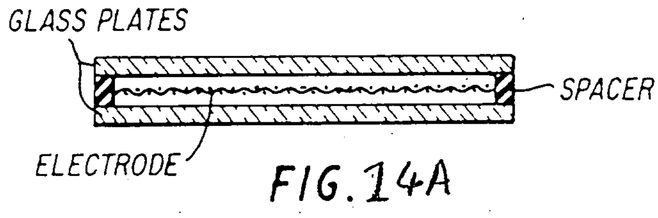


FIG. 14A

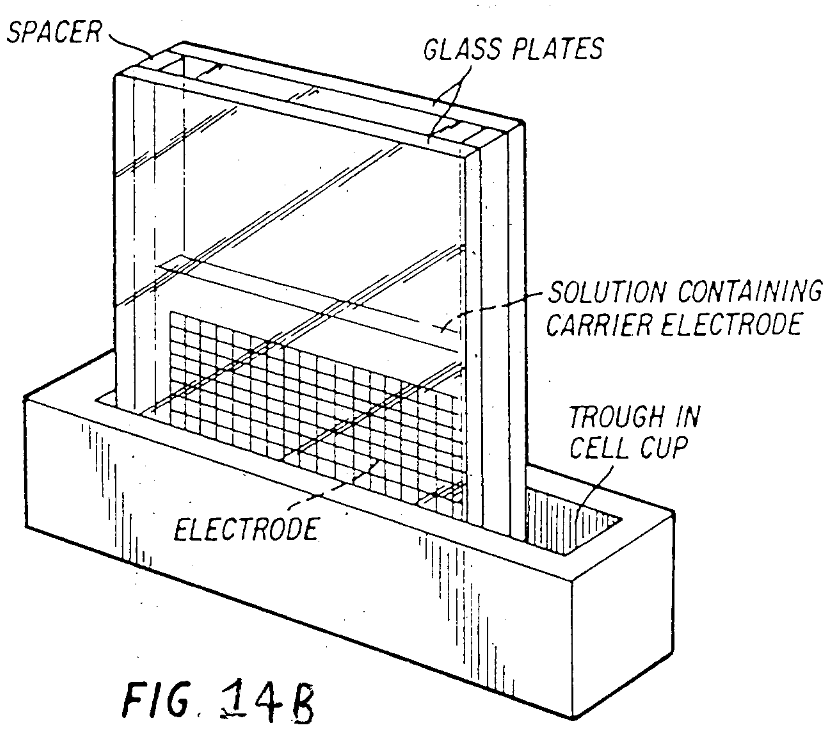


FIG. 14B

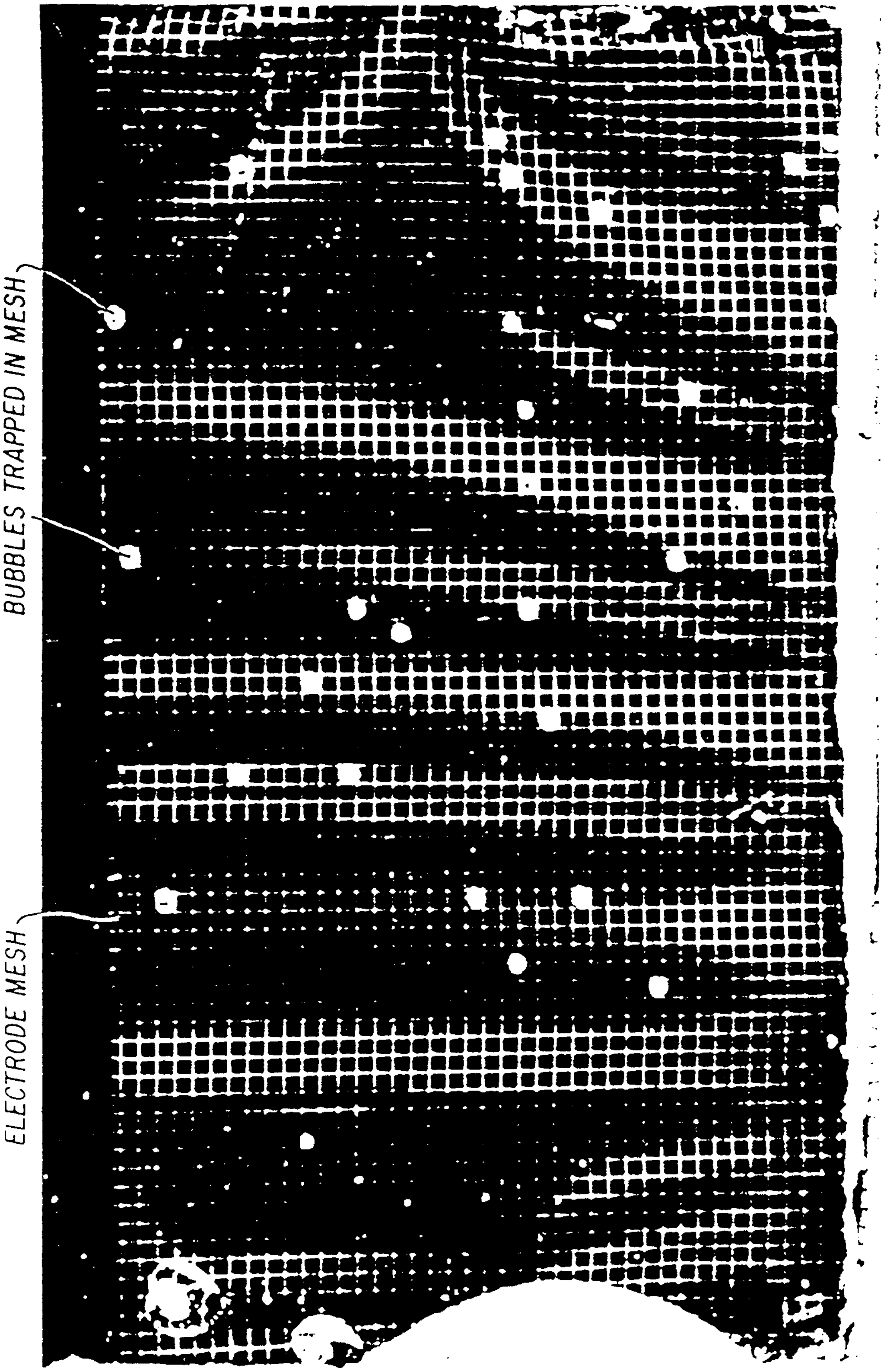


FIG. 15 BUBBLES PRODUCED BY OXIDIZING THE CARRIER SYSTEM. Fe (CAPPED) PORPHYRIN IN DMSO/1-Me-IMIDAZOLE